# EUROPEAN PATENT SPECIFICATION

(11) **EP 2 685 372 B1**
(45) Date of publication and mention of the grant of the patent: **05.09.2018**
(21) Application number: 13175722.1
(22) Date of filing: 09.07.2013
(51) Int. Cl.: G06F 3/12

(54) **Service providing system, service providing method, and non-transitory computer readable information recording medium**
Dienstbereitstellungssystem, Dienstbereitstellungsverfahren und übergangsloses computerlesbares Informationsaufzeichnungsmedium
Système de fourniture de service, procédé de fourniture de service, et support d'enregistrement d'informations lisibles par ordinateur non temporaires

(30) Priority: 10.07.2012 JP 2012154915; 04.07.2013 JP 2013140310
(43) Date of publication of application: 15.01.2014
(73) Proprietor: Ricoh Company, Ltd., Tokyo 143-8555 (JP)
(72) Inventor: Yamada, Kazuhiro, Ohta-ku, Tokyo 143-8555 (JP)
(74) Representative: Round, Edward Mark

(56) References cited:
- EP-A2- 2 413 234
- US-A1- 2011 085 196
- US-A1- 2011 096 354

## Description

### BACKGROUND OF THE INVENTION

### 1. Field of the Invention

The present invention relates to a service providing system, a service providing method, and a non-transitory computer readable information recording medium.

### 2. Description of the Related Art

For example, a host session management server is known, which can easily realize a communication service using a plurality of different apparatuses that operate in cooperation with each other (for example, see Japanese Laid-Open Patent Application No. 2011-35833).

Recently, users use various electronic apparatuses such as a printer, a MultiFunction Peripheral (MFP), a projector and so forth, which output electronic data, and/or various information processing apparatuses such as a portable phone, a smartphone, a tablet terminal and so forth. Concerning such a mode (system) using these electronic apparatuses and information processing apparatuses, it is expected to improve the utility values thereof as a result of causing these apparatuses to operate in cooperation with each other.

For this purpose, in such a system of using electronic apparatuses and information processing apparatuses, a mechanism has been demanded by which various electronic apparatus and information processing apparatuses operate in cooperation with each other to provide a service(s).

US 2011/0096354A discloses transmitting data of a terminal from the terminal to a printer device via a printer server and instructing the printer device to execute printing.

US 2011/0085196A discloses obtaining a QR code from a printer and instructing a printer to print document data stored in a portable terminal via a server.

EP 2413234A discloses transmitting a document ID and printer data to a printer server, the printer server converting printing data based on the printer data, and outputting the converted data via a portable terminal.

The invention is in the system of claim 1, the method of claim 5 and the medium of claim 7.

Other objects, features and advantages of the present invention will become more apparent from the following detailed description when read in conjunction with the accompanying drawings.

### BRIEF DESCRIPTION OF THE DRAWINGS

FIG. 1 is a configuration diagram of one example of a service providing system according to a first embodiment;
FIG. 2 is a hardware configuration diagram of one example of a computer system according to the first embodiment;
FIG. 3 is a processing block diagram of one example of an information storage apparatus according to the first embodiment;
FIG. 4 is a sequence diagram of one example of a procedure of the service providing system according to the first embodiment;
FIG. 5 is a configuration diagram of one example of a response to a file list obtaining request;
FIG. 6 is an image diagram of one example of an IT folder selection screen page;
FIG. 7 is an image diagram of one example of a folder display screen page;
FIG. 8 is an image diagram of one example of a file list display screen page;
FIG. 9 is an image diagram of one example of a file detail display screen page;
FIG. 10 is an image diagram of one example of a print setting screen page;
FIG. 11 is an image diagram of one example of a QR code reading screen page;
FIG. 12 is a configuration diagram of one example of information to be read from a QR code;
FIG. 13 is an image diagram of one example of a screen page indicating that downloading is being carried out:
FIG. 14 illustrates one example of a method of transmitting a print file to a MFP;
FIG. 15 is a configuration diagram of one example of print commands included in the print file;
FIG. 16 is an image diagram of one example of a QR code displayed on the MFP;
FIG. 17 is an image diagram of one example of a top screen page displayed on the MFP;
FIG. 18 is a flowchart of one example showing a procedure of a smartphone;
FIG. 19 is a sequence diagram of another example showing a procedure of the service providing system according to the first embodiment;
FIG. 20 is a configuration diagram of another example of information to be read from a QR code;
FIG. 21 illustrates one example of a method of transmitting a projection file to a projector;
FIG. 22 is an image diagram of one example of a QR code displayed by the projector;
FIG. 23 is a sequence diagram of yet another example showing a procedure of the service providing system according to the first embodiment;
FIG. 24 is a sequence diagram of one example showing a procedure of a service providing system according to a second embodiment;
FIG. 25 is a sequence diagram of another example showing a procedure of the service providing system according to the second embodiment;
FIG. 26 is a sequence diagram of yet another example showing a procedure of the service providing system according to the second embodiment; and
FIG. 27 is a sequence diagram of yet another example of a procedure of the service providing system according to the first embodiment.

### DETAILED DESCRIPTION OF THE EMBODIMENTS

Below, the embodiments of the present invention will be described.

### [First Embodiment]

### <System Configuration>

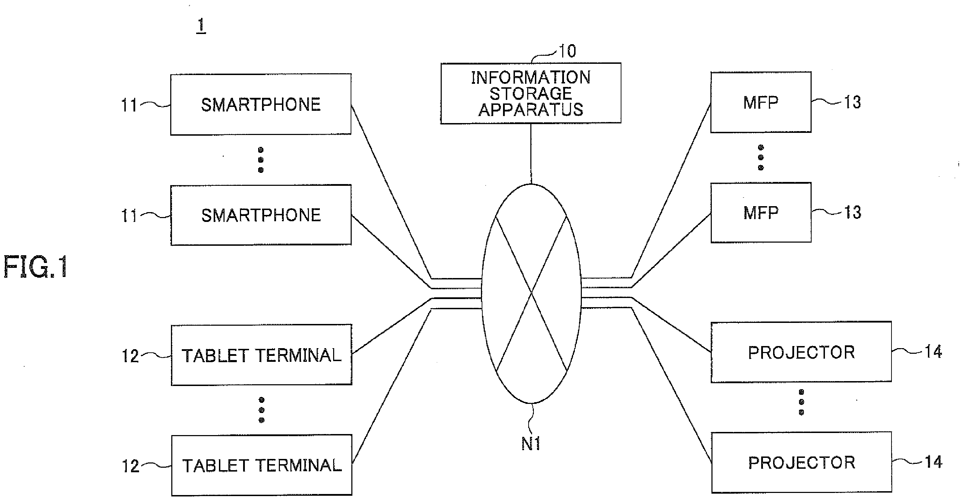

FIG. 1 is a configuration diagram of one example of the service providing system according to the first embodiment. In the service providing system 1 of FIG. 1, for example, an information storage apparatus 10, one or more smartphones 11, one or more tablet terminals 12, one or more MFPs 13 and one or more projectors 14 are connected to a network N1 such as a Local Area Network (LAN).

As the network N1, it is possible to use a network of a private environment such as an intranet, for example. The smartphones 11 and the tablet terminals 12 are examples of information processing apparatuses that users carry and operate. Specific examples of the information processing apparatuses may be apparatuses that users can operate, and thus include, not only the above-mentioned smartphones 11 and the tablet terminals 12, but also portable phones, notebook-size Personal Computers (PC), and so forth.

The MFPs 13 and the projectors 14 are examples of electronic apparatuses that provide services such as print, scan, projection and so forth. Specific examples of the electronic apparatuses may be apparatuses that can provide services, and thus include, not only the above-mentioned MFPs 13 and the projectors 14, but also printers, scanners, copiers, image display apparatuses, and so forth.

The MFPs 13 are examples of image forming apparatuses. The MFPs 13 have image taking functions, image forming functions and communication functions, and can be used as printers, facsimile machines, scanners and copiers. The projectors 14 are examples of image projection apparatuses, and have projection functions and communication functions.

The information storage apparatus 10 is one example of a cooperative processing apparatus. The information storage apparatus 10 carries out such sophisticated processes that the MFPs 13 and projectors 14 cannot carry out, and carries out processes as a file server. The information storage apparatus 10 provides services using electronic apparatuses such as the MFPs 13 and/or the projectors 14 in cooperation with information processing apparatuses (operation terminals) such as the smartphones 11 and/or the tablet terminals 12. It is noted that the information storage apparatus 10 may be configured by a plurality of computers in a decentralized manner.

### <Hardware Configuration>

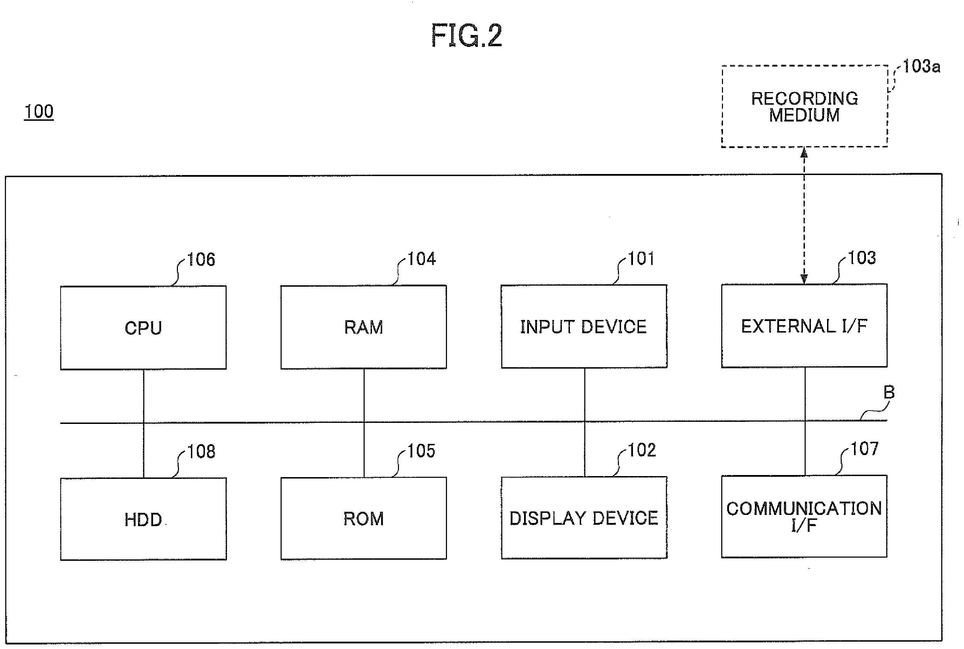

The information storage apparatus 10 is realized, for example, by a computer system 100 having the hardware configuration shown in FIG. 2. Also, information processing apparatuses such as the smartphones 11 and the tablet terminals 12 include the hardware configurations shown in FIG. 2. FIG. 2 is a hardware configuration diagram of one example of the computer system according to the first embodiment.

The computer system 100 of FIG. 2 includes an input device 101, a display device 102, an external I/F 103, a RAM 104, a ROM 105, a CPU 106, a communication I/F 107 and a Hard Disk Drive (HDD) 108, which are connected together via a bus B. The input device 101 includes a keyboard, a mouse and so forth, and is used to input respective operation signals.

The display device 102 includes a display and/or the like, and displays processing results of the computer system 100. The communication I/F 107 is an interface for connecting the computer system 100 to the network N1. Thereby, the computer system 100 can carry out data communication with the other apparatuses via the communication I/F 107.

The HDD 108 is a nonvolatile storage device storing programs and data. The programs stored by the HDD 108 include an Operating System (OS) that is basic software controlling the entirety of the computer system 100, application software providing various functions under the control of the OS, and so forth. The HDD 108 manages the stored programs and data using a predetermined file system and/or DataBase (DB).

The external I/F 103 is an interface between the computer system 100 and external devices. The external devices include a recording medium 103a and so forth. Thereby, the computer system 100 can carry out reading from and/or writing to the recording medium 103a via the external I/F 103. It is noted that specific examples of the recording medium 103a include a flexible disk, a CD, a Digital Versatile Disk (DVD), a SD memory card, a Universal Serial Bus memory (USB memory) and so forth.

The ROM 105 is a nonvolatile semiconductor memory (storage device) and thus can store programs and/or data even after the power supply has been turned off. The ROM 105 stores programs and data such as a Basic Input/Output System (BIOS) to be executed when the computer system 100 is started up, OS settings, network settings, and so forth. The RAM 104 is a volatile semiconductor memory (storage device) and temporarily stores programs and/or data.

The CPU 106 includes an arithmetic and logic unit, reads programs and/or data from storage device(s) such as the ROM 105 and/or HDD 108 to the RAM 140, carries out processes, and thus, realizes controls and/or functions of the entirety of the computer system 100.

The computer system 100 according to the first embodiment can realize various processes described later using this hardware configuration.

### <Software Configuration>

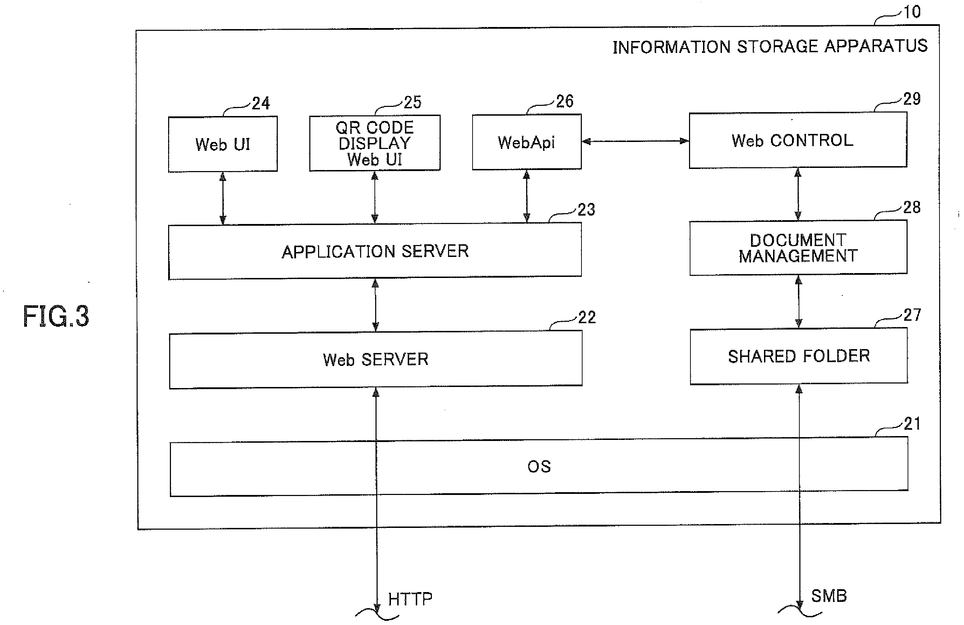

The information storage apparatus 10 according to the first embodiment includes the processing blocks shown in FIG. 3, for example. The information storage apparatus 10 executes a program(s), and thus, realizes respective functions of an OS 21, a Web server 22, an application server 23, a Web UI 24, a QR code display Web UI 25, a WebApi 26, a shared folder 27, a document management part 28 and a Web control part 29.

The OS 21 is the OS of the information storage apparatus 10, and controls the entirety of the system of the information storage apparatus 10. The OS 21 is, for example, Windows (registered trademark), Linux (registered trademark) or the like.

The Web server 22 is software for transmitting and receiving information using Hyper Text Transfer Protocol (HTTP). The Web server 22 is, for example, Apache (registered trademark), IIS (registered trademark) or the like.

The application server 23 is software operating as plug-in of the Web server 22, for example. The application server 23 is, for example, Tomcat (registered trademark) or the like.

The Web UI 24 displays a system setting screen page in response to a HTTP request. A user can change settings via the system setting screen page using a Web browser (not shown).

The QR code display Web UI 125 displays, on the electronic apparatus such as the MFP 13, a screen page of QR code (registered trademark) as one example of code information, in response to a HTTP request. The QR code is a two-dimensional code of a matrix type.

The Web Application programming interface (WebApi) 26 can be used via the network N1. The WebApi receives an HTTP request, carries out a process(s) according to the HTTP request, and sends an HTTP response.

The WebApi 26 is an interface that is previously defined and provided for receiving a request from the information processing apparatus such as the smartphone 11, the tablet terminal 12 or the like, and includes a function(s), a class(es) and/or the like.

Further, it is possible to provide the WebApi 26 in a form of a Software Development Kit (SDK), to a developer who develops applications to be installed in the information processing apparatus(es). The developer can develop application(s) using the SDK. The SDK may also be provided to a third vender other than a person who provides the information storage apparatus 10. The third vendor can develop an application(s) using the provided SDK. The application(s) developed using the SDK can be installed in the information processing apparatus(s).

By thus providing the WebApi of the information storage apparatus 10 as a SDK, it is possible to install, in the information processing apparatus(es), not only an application(s) developed by a person who provides the information storage apparatus 10 but also an application(s) developed by a third vendor.

The shared folder 27 is a folder published to the network N1 by a Server Message Block (SMB) protocol. A user can access the shared folder 27 using the information processing apparatus such as the smartphone 11 or the tablet terminal 12.

The document management part 28 manages a file(s) placed in the shared folder 27 and carries out data conversion in response to a request given by the Web control part 29. It is noted that a "file(s)" in the first embodiment is(are) one form of data. The Web control part 29 carries out a process of controlling the document management part 28 in response to a request given by the WebApi 26.

It is noted that, generally, two processes operate in the information storage apparatus 10. One of these two processes includes the Web server 22, the application server 23, the Web UI 24, the QR code display Web UI 25 and the WebApi 26. The other process includes the shared folder 27, the document management part 28 and the Web control part 29. Therefore, the WebApi 26 and the Web control part 29 carry out interprocess communication.

### <Details of Processing>

Below, details of processing of the service providing system 1 according to the first embodiment will be described.

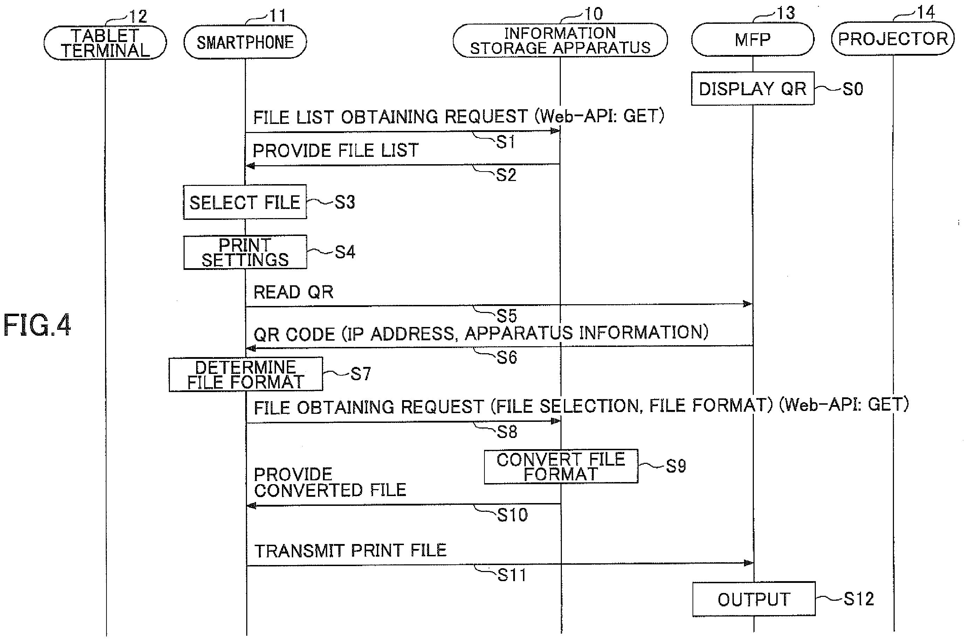

Here, processing will be described for a case where, using the smartphone 11, a file that the information storage apparatus 10 has is printed by the MFP 13. FIG. 4 is a sequence diagram of one example showing a procedure of the service providing system 1 according to the first embodiment.

First, a user operates the smartphone 11, and selects a file list display process. When the file list display process has been thus selected by the user, the smartphone 11 sends a file list obtaining request to the information storage apparatus 10 by, for example, a HTTP request (GET), in step S1.

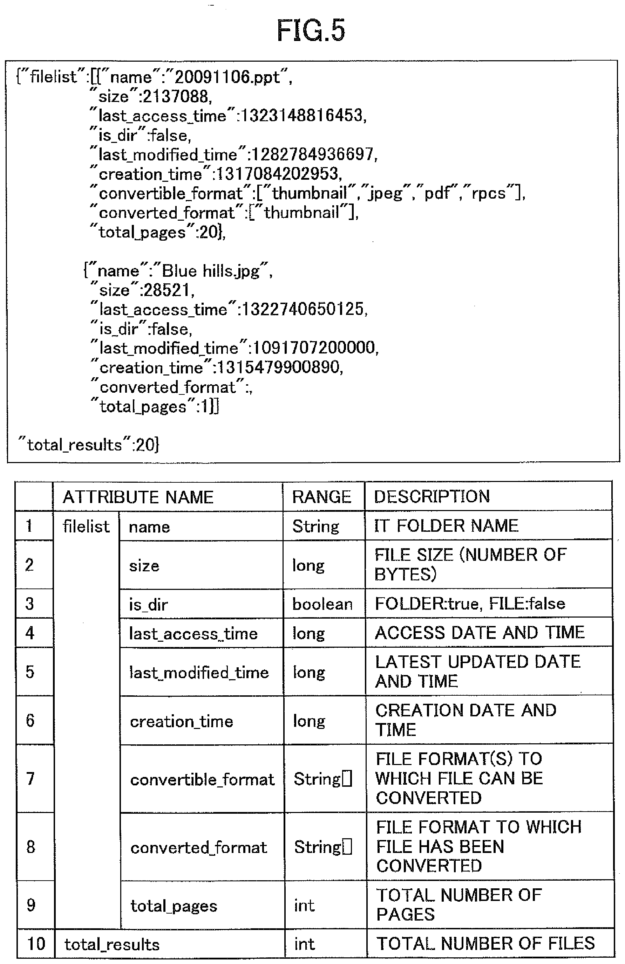

Then, in step S2, the WebApi 26 of the information storage apparatus 10 receives the file list obtaining request, and sends a file list obtaining request to the Web control part 29. The Web control part 29 responds to the file list obtaining request sent by the WebApi 29, obtains a file list from the document management part 28 and returns the file list to the WebApi 26. The WebApi 26 then provides a list of files or folders to the smartphone 11 via a HTTP response such as that shown in FIG. 5.

FIG. 5 is a configuration diagram of one example of a response to a file list obtaining request such as that mentioned above. The response of FIG. 5 has a JSON format. However, the format of the response is not limited thereto, and any other format can be used as long as it is possible to display a list of files or folders by the smartphone 11. An application installed in the smartphone 11 displays, based on such a response to the file list obtaining request shown in FIG. 5, a file list (including folder(s)) published by the information storage apparatus 10.

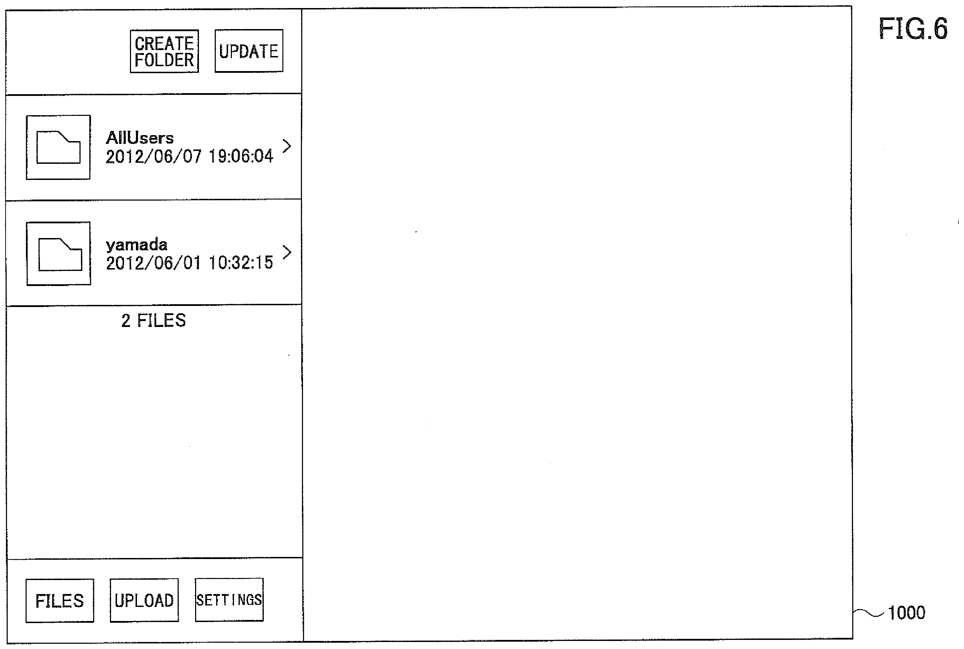

By repeating the processes of steps S1 and S2, the smartphone 11 displays screen pages such as those shown in FIGs. 6, 7, 8 and 9. FIG. 6 is an image diagram of one example of an IT folder selection screen page. Via the IT folder selection screen page 1000 of FIG. 6, the user can select, as an IT folder, either "AllUsers" or "yamada".

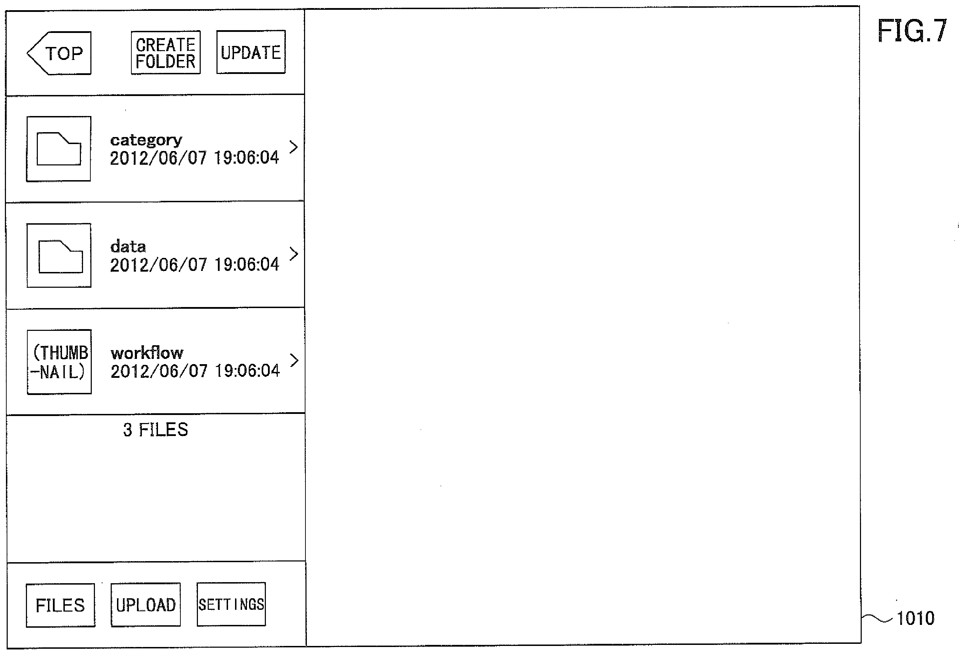

FIG. 7 is an image diagram of one example of a folder display screen page. The folder display screen page 1010 of FIG. 7 is a screen page example displayed after the "AllUsers" IT folder has been selected from the IT folder selection screen page 1000 of FIG. 6. On the folder display screen page 1010 of FIG. 7, "category", "data" and "workflow" are displayed as folders.

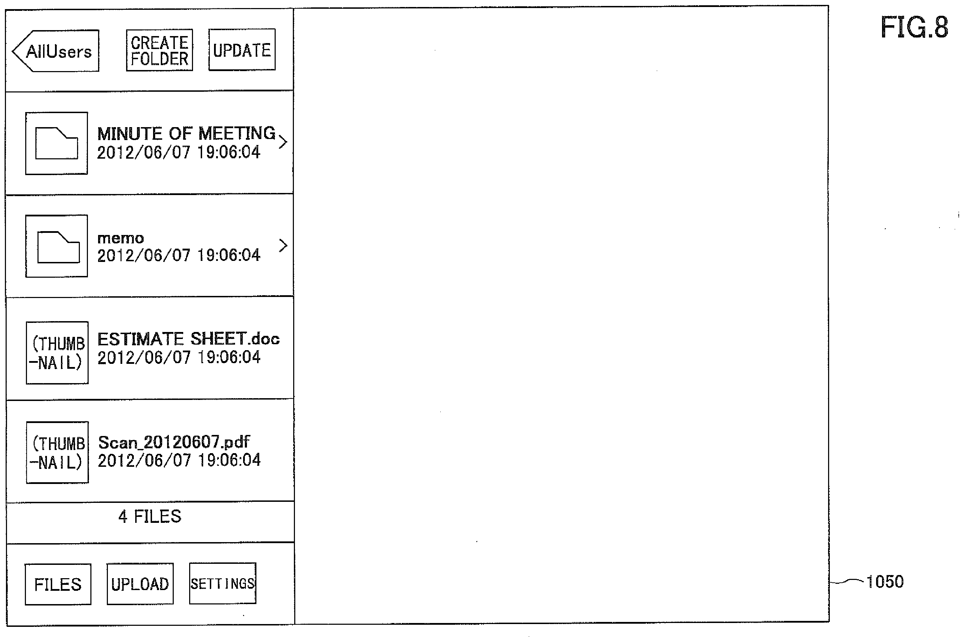

FIG. 8 is an image diagram of one example of a file list display screen page. The file list display screen page 1050 of FIG. 8 is a screen page example displayed after the "data" folder has been selected from the folder display selection screen page 1010 of FIG. 7. On the file list display screen page 1050 of FIG. 8, "Estimate Sheet.doc" and "Scan_20120607.pdf" are displayed as files.

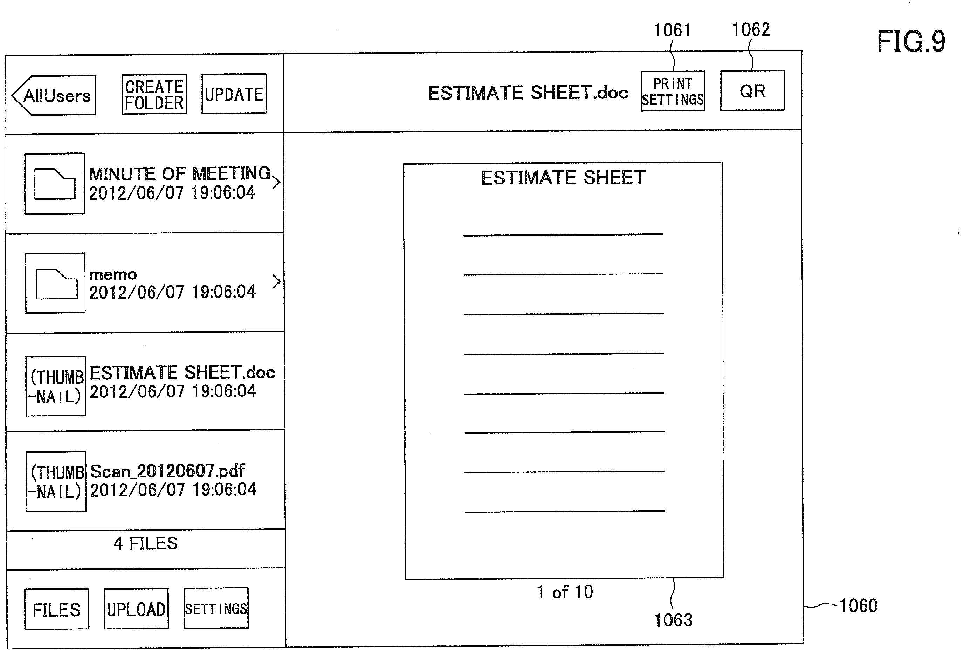

FIG. 9 is an image diagram of one example of a file detail display screen page. The file detail display screen page 1060 of FIG. 9 is a screen page example displayed after the "Estimate Sheet.doc" file has been selected from the file list display screen page 1050 of FIG. 8. On the file detail display screen page 1060 of FIG. 9, an image 1063 of the "Estimate Sheet.doc" file thus selected from the file list display screen page 1050 is displayed.

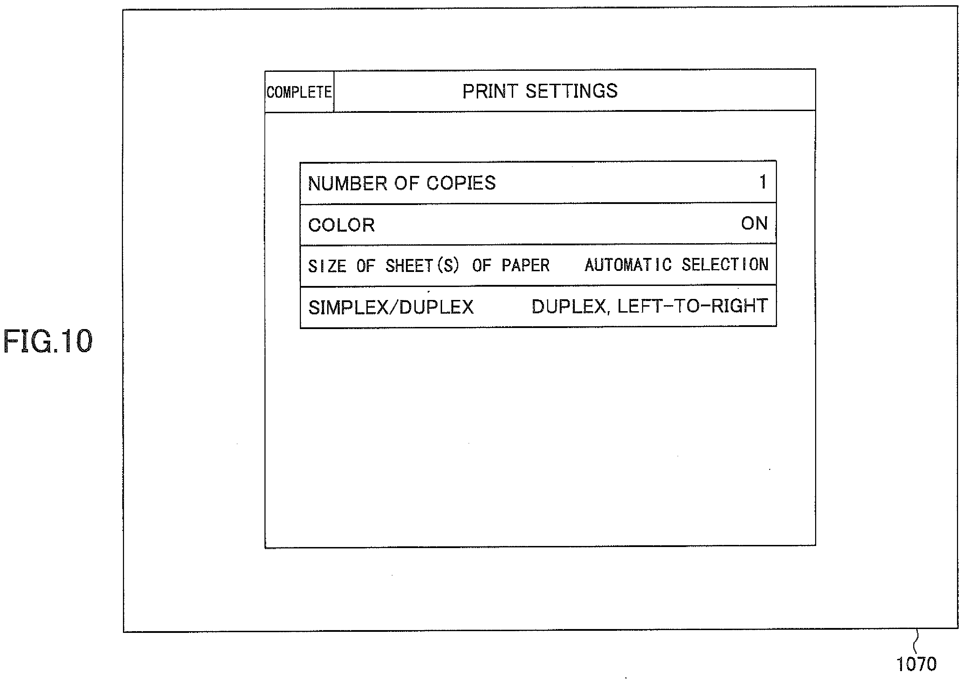

Then, in step S3 of FIG. 4, the user operates the smartphone 11 and selects a file to be printed by the MFP 13 from among the files shown in FIG. 8 or FIG. 9. Then, when a "print settings" button has been pressed on the file detail display screen page 1060 of FIG. 9, the smartphone 11 displays a print setting screen page 1070 shown in FIG. 10 in step S4. FIG. 10 is an image diagram of one example of the print setting screen page 1070. The user then operates the smartphone 11 and carries out settings for print to be carried out by the MFP 13 via the displayed print setting screen page 1070 of FIG. 10.

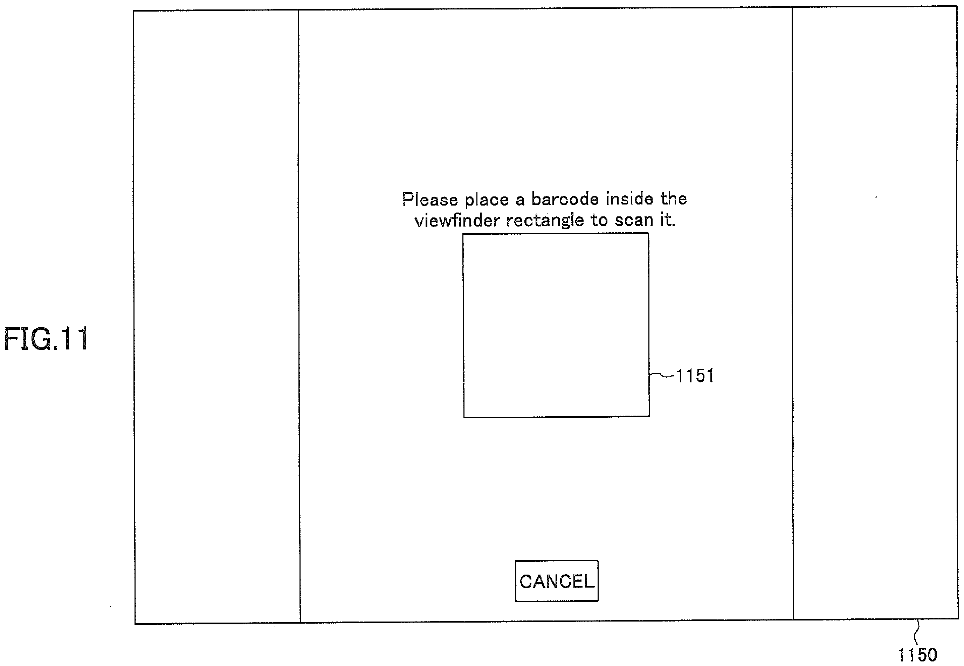

After selecting a file to be printed by the MFP 13 from the files shown in FIG. 8 or 9, the user may press a "QR" button 1062 on the file detail display screen page 1060 of FIG. 9. Thus, the user can cause a QR code reading screen page 1150, shown in FIG. 11, for example, to be displayed on the smartphone 11. FIG. 11 is an image diagram of one example of the QR code reading screen page 1150 displayed on the smartphone 11. The QR code reading screen page 1150 includes a QR code display area 1151. The QR code display area 1151 is an area in which an image taken by the camera function of the smartphone 11 will be displayed.

In steps S5 and S6 of FIG. 4, the user operates the smartphone 11, and adjusts a positional relationship between the QR code displayed on the MFP 13 (step S0) and the smartphone 11 so that the QR code an image of which is thus taken by the camera function of the smartphone 11 will be displayed in the QR code display area 1151 of the QR code reading screen page 1150 displayed on the smartphone 11.

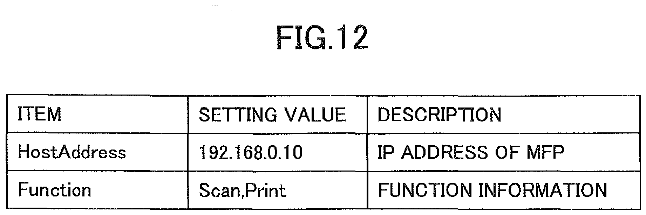

The application of the smartphone 11 reads, from the QR code an image of which has been thus taken by the camera function, the IP address of the MFP 13 and the function information indicating the scan function and print function that the MFP 13 provides, as shown in FIG. 12. FIG. 12 is a configuration diagram of one example of the information that the application of the smartphone 11 reads from the QR code displayed in step S0 of FIG. 4.

It is noted that, a specific method of obtaining the IP address and function information of the MFP 13 or the like is not limited to the above-mentioned method of obtaining information from a QR code by photographing it. It is also possible to obtain the IP address and function information of the MFP 13 or the like using a communication way for sending and receiving information between the smartphone 11 and the MFP 13 or the like. For example, infrared communication, Bluetooth, NFC or the like can be used for this purpose. Thus, various methods can be used even without using a QR code.

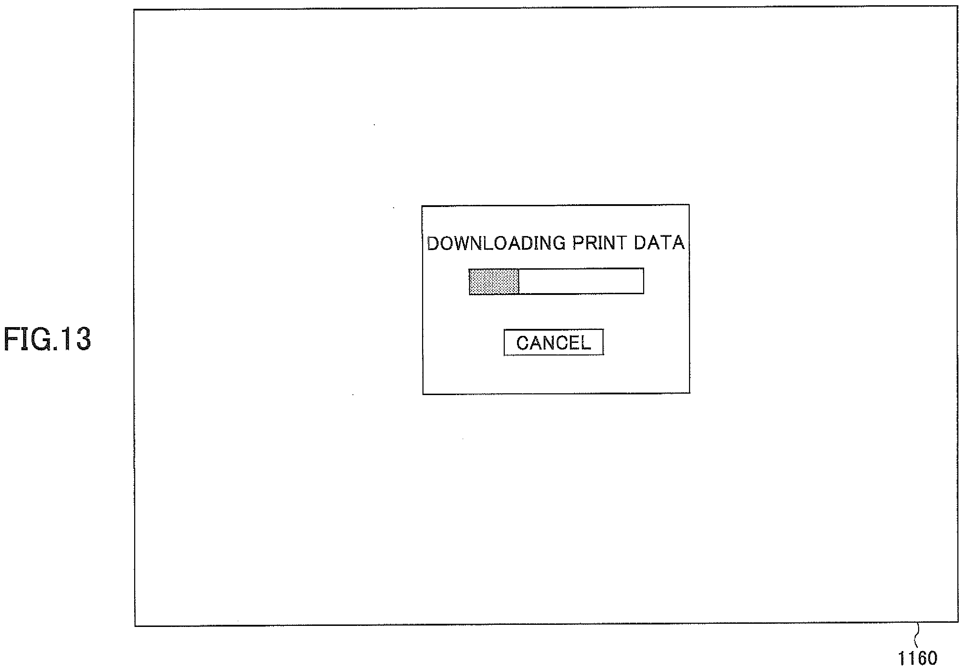

After thus reading the IP address and the function information indicating the scan function and the print function of the MFP 13 from the QR code taken by the camera function, the application of the smartphone 11 displays to the user a screen page 1160 indicating that downloading is being carried out, as shown in FIG. 13. FIG. 13 is an image diagram of one example of the screen page 1160 indicating that downloading of a print file is being carried out. The screen page 1160 of FIG. 13 may be continuously displayed by the smartphone 11 until step S11 described later is completed.

It is noted that, timing of displaying the QR code on the MFP 13, timing of providing the file list from the information storage apparatus 10 to the smartphone 11 and timing of reading information from the QR code displayed on the MFP 13 by the smartphone 11 are not limited to the order shown in the sequence diagram of FIG. 4.

In step S7, the application of the smartphone 11 determines a file format as described later depending on the function information that the application of the smartphone 11 has read information from the QR code. For example, when the function information includes the print function, the application of the smartphone 11 determines the file format as RPCS, PDL or the like which can be printed by the MFP 13.

In step S8, the application of the smartphone 11 sends a file obtaining request to the information storage apparatus 10. The file obtaining request includes information of the file selection and information of the file format determined in step S7.

In Step S9, the WebApi 26 of the information storage apparatus 10 receives the file obtaining request and sends a corresponding file obtaining request to the Web control part 29. The Web control part 29 obtains the corresponding file from the shared folder 27 based on the "information of the file selection" included in the file obtaining request thus received from the WebApi 26.

Further, the Web control part 29 determines, based on the "information of the file format" included in the file obtaining request from the WebApi 26, whether it is necessary to convert the file format of the file thus obtained from the shared folder 27. For example, when the file format of the file obtained from the shared folder 27 and the file format indicated by the "information of the file format" obtained from the WebApi 26 are the same, the Web control part 29 determines that conversion of the file format of the file obtained from the shared folder 27 is not necessary.

On the other hand, when the file format of the file obtained from the shared folder 27 and the file format indicated by the "information of the file format" obtained from the WebApi 26 are different from one another, the Web control part 29 determines that conversion of the file format of the file obtained from the shared folder 27 is necessary. When having determined that it is necessary to convert the file format, the Web control part 29 causes the document management part 28 to convert the file format into the file format indicated by the "information of the file format", accordingly. Below, a case where the Web control part 29 has determined that it is necessary to convert the file format will be described. The Web control part 29 then returns the converted file, the file format of which has been thus converted, to the WebApi 26.

In step S10, the WebApi 26 provides the converted file to the smartphone 11 via a HTTP response. In step S11, the application of the smartphone 11 transmits the converted file to the MFP 13 as a print file.

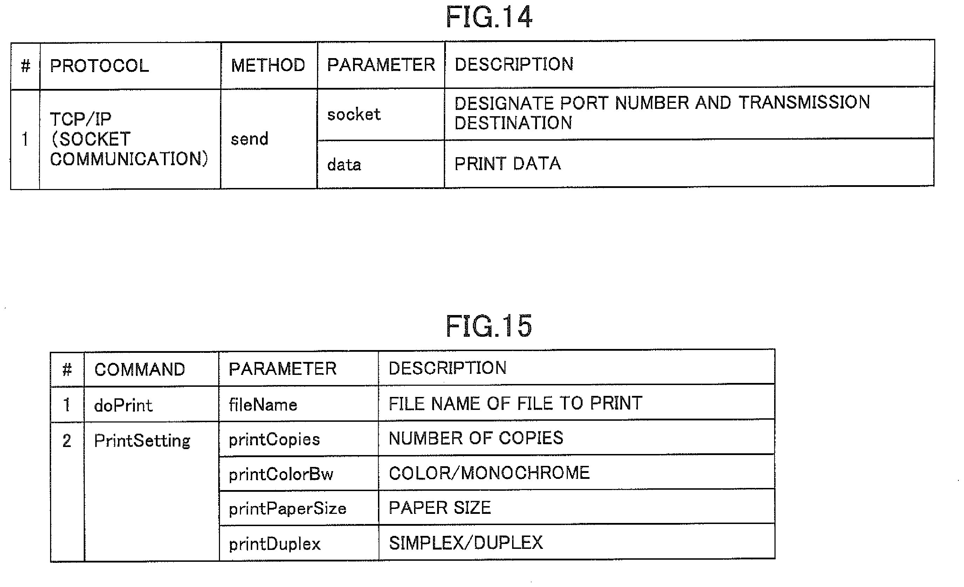

A specific method of thus transmitting a print file to the MFP 13 is, for example, a method of transmitting using a socket communication to the port of the number 9100 ("port 9100") of the MFP 13, as shown in FIG. 14. FIG. 14 illustrates one example of a method of transmitting a print file to the MFP 13. When having received the print file, the MFP 13 carries out printing (output) based on the print file, in step S12.

FIG. 15 is a configuration diagram of one example of print commands included in a print file. The print commands of FIG. 15 include the contents of print settings that have been carried out via the print setting screen page 1070 of FIG. 10 (#2 in FIG. 15) and a file name of a file to be printed (#1 in FIG. 15).

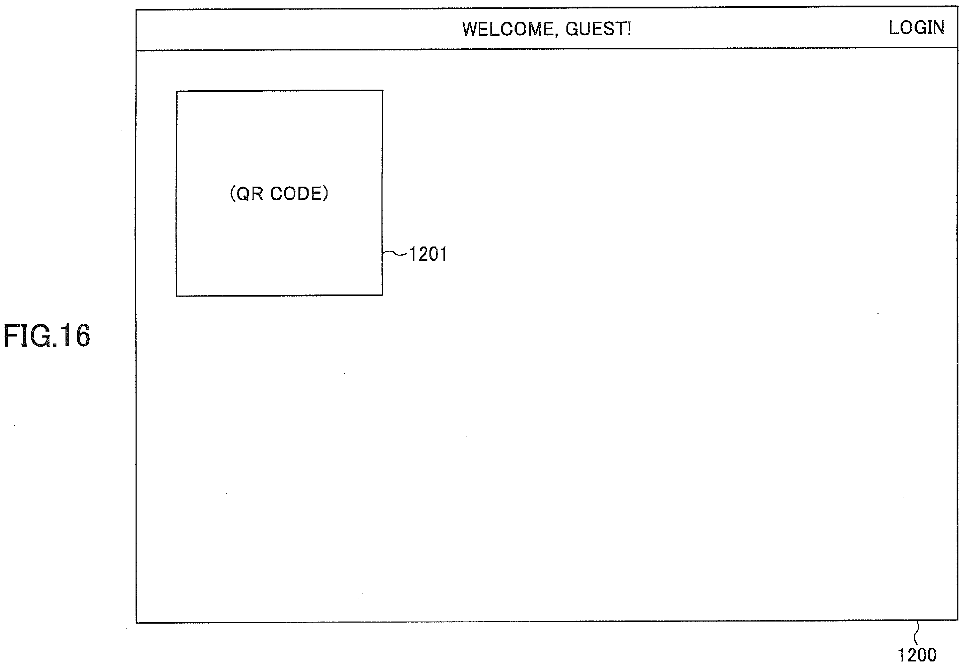

Further, the MFP 13 can display (in step S0), via a Web browser (not shown), a screen page 1200 including a QR code 1201 as shown in FIG. 16 on an operation panel or the like of the MFP 13 as a result of displaying the QR code display Web UI 25 of the information storage apparatus 10.

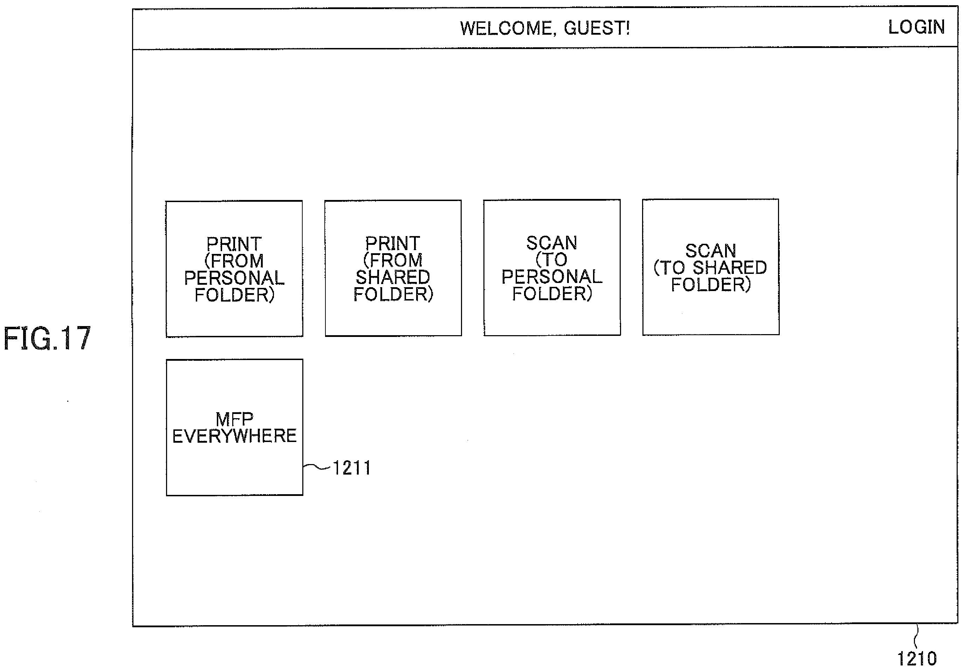

FIG. 16 is an image diagram of one example of a QR code displayed on the MFP 13. It is noted that the screen page 1200 of FIG. 16 is displayed as a result of a "MFP Everywhere" button 1211 on the top screen page 1210 of the Web browser (not shown) of the MFP 13 shown in FIG. 17 being pressed, for example. FIG. 17 is an image diagram of one example of the top screen page displayed on the MFP 13.

It is noted that, although the example of displaying the QR code 1201 on the screen page 1200 in FIG. 16 has been described, it is also possible to affix a seal of the QR code 1201 onto the housing of the MFP 13, as another example. Further, it is possible that the MFP 13 stores image data of the QR code 1201 in the MFP 13 itself. Other than affixing a seal of the QR code 1201 on the housing of the MFP 13, it is also possible to affix a seal of the QR code 1201 on, for example, a wall of a room in which the MFP 13 is installed. In other words, a specific position to affix a seal of the QR code 1201 is preferably a position such that a user can understand that the QR code 1201 is one that is associated with the MFP 13.

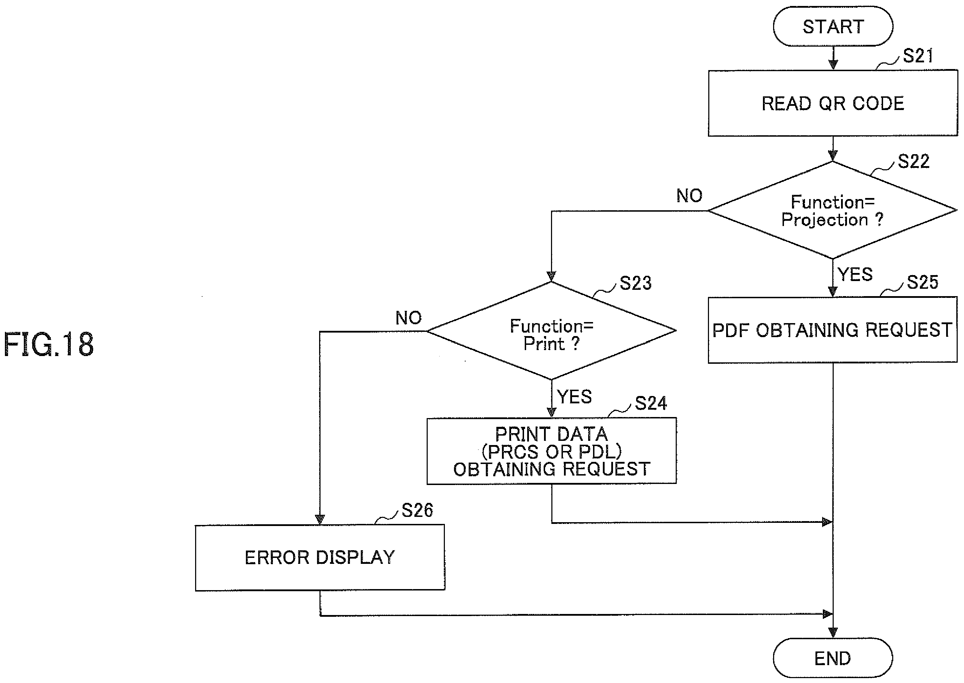

FIG. 18 is a flowchart of one example of a procedure of the smartphone 11. It is noted that the flowchart of FIG. 18 shows the procedure to be carried out after the QR code reading screen page 1150 shown in FIG. 11 has been displayed on the smartphone 11 as mentioned above.

In step S21 of FIG. 18, the application of the smartphone 11 reads the set value of item "Function" shown in FIG. 12 from the QR code that has been taken by the camera function of the smartphone 11.

In step S22, the application of the smartphone 11 determines whether the set value of item "Function" is "Projection" that indicates the projection function (projector 14). When the set value of item "Function" is "Projection" that indicates the projection function (projector 14), the application of the smartphone 11 proceeds to step S25, and sends a file obtaining request that designates PDF that can be projected by the projector 14 as a file format to the information storage apparatus 10.

When the set value of item "Function" is not "Projection" that indicates the projection function (projector 14), the application of the smartphone 11 proceeds to step S23, and determines whether the set value of item "Function" is "Print" that indicates the print function (MFP 13). When the set value of item "Function" is "Print" that indicates the print function (MFP 13), the application of the smartphone 11 proceeds to step S24, and sends a file obtaining request that designates RPCS or PDL that can be printed by the MFP 13 as a file format to the information storage apparatus 10.

When the set value of item "Function" is not "Print" that indicates the print function (MFP 13) in step S23, the application of the smartphone 11 proceeds to step S26, and carries out an error display process since it is not possible to determine a file format to be designated by a file obtaining request.

According to the sequence diagram of FIG. 4, it is possible to display, on the smartphone 11, the files placed in the shared folder 27 of the information storage apparatus 10, by installing the WebApi 26 in the information storage apparatus 10. A user can obtain from the information storage apparatus 10 a converted file of a file format that can be printed by the MFP 13, by selecting the file via the smartphone 11 and reading via the smartphone 11 information from the QR code 1201 of the MFP 13 that the user wishes to use to print the file. The smartphone 11 can cause the MFP 13 to print the converted file thus obtained from the information storage apparatus 10 by transmitting the converted file to the MFP 13 as a print file. It is noted that the smartphone 11 can also store the converted file that has been obtained from the information storage apparatus 10.

Thus, a user can cause the information storage apparatus 10, the smartphone 11 and the MFP 13 to operate in cooperation with each other by holding the smartphone 11 against the MFP 13 at a time of starting print (to cause the smartphone 11 to read information from the QR code of the MFP 13), and thus, the user can easily print by the MFP 13 a file placed in the shared folder 27 of the information storage apparatus 10.

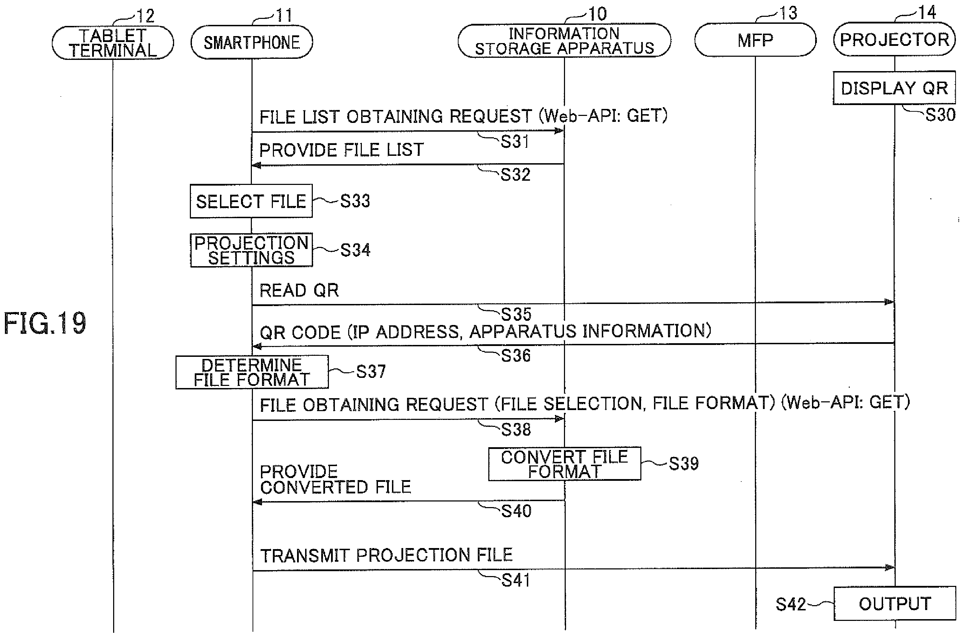

The sequence diagram of FIG. 4 shows the process of obtaining a file from the information storage apparatus 10 using the smartphone 11, and printing the file by the MFP 13. The service providing system 1 according to the first embodiment can also be used, as shown in FIG. 19, to obtain a file from the information storage apparatus 10 using the smartphone 11, and project the file by the projector 14.

FIG. 19 is a sequence diagram of another example showing a procedure of the service providing system 1 according to the first embodiment. It is noted that the processes of steps S30, S31, S32 and S33 of FIG. 19 are the same as those of steps S0, S1, S2 and S3 of FIG. 4, and thus, duplicate description will be omitted.

When a "projection settings" button (not shown) has been pressed on the file detail display screen page 1060, the smartphone 11 displays a projection setting screen page in step S34. The user then operates the smartphone 11 and carries out settings for projection to be carried out by the projector 14 via the displayed projection setting screen page.

After selecting a file to be projected by the projector 14 from the files shown in FIG. 8 or 9, the user presses the "QR" button 1062 on the file detail display screen page 1060. Thereby, the user can cause the QR code reading screen page 1150, as shown in FIG. 11, for example, to be displayed on the smartphone 11.

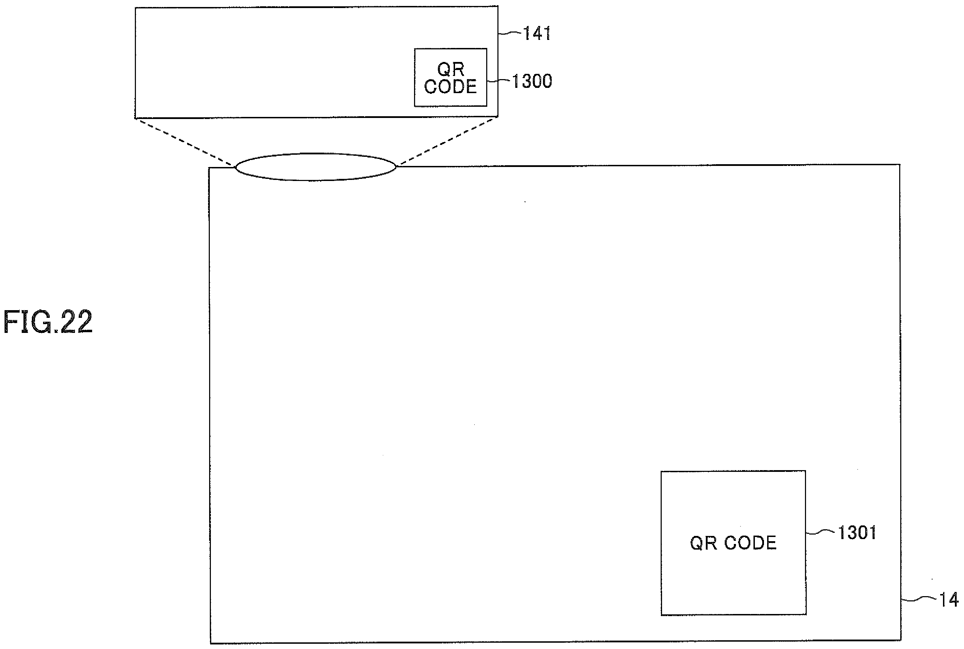

In steps S35 and S36, the user operates the smartphone 11, and adjusts a positional relationship between the QR code displayed by the projector 14 (step S30) (onto a projection screen 141 or the like as shown in FIG. 22 described later) and the smartphone 11 so that the QR code taken by the camera function of the smartphone 11 will be displayed in the QR code display area 1151 of the QR code reading screen page 1150 displayed on the smartphone 11.

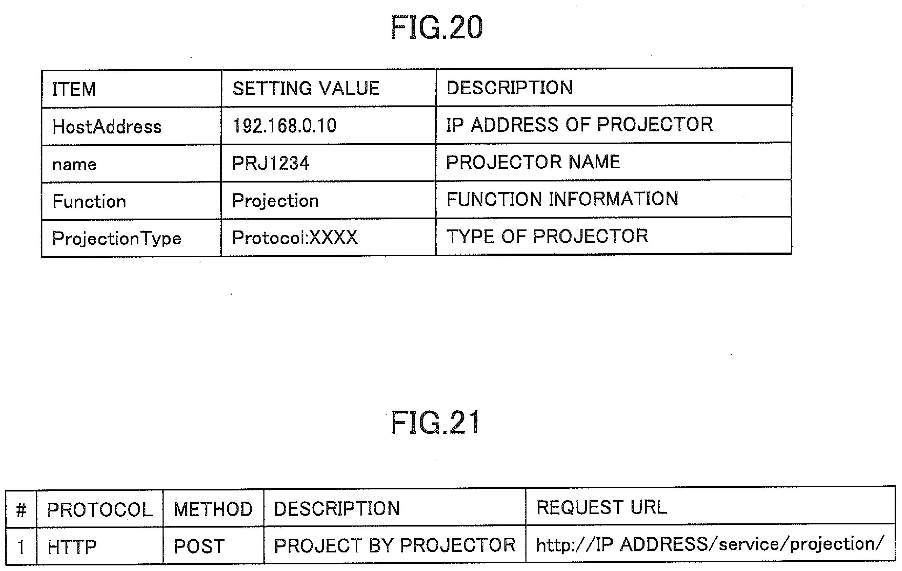

The application of the smartphone 11 reads, from the QR code taken by the camera function of the smartphone 11, the IP address of the projector 14, a projector name, the function information indicating the projection function that the projector 14 provides, and a type of the projector 14 as shown in FIG. 20. FIG. 20 is a configuration diagram of one example of the information that the application of the smartphone 11 reads from the QR code.

After thus reading the IP address and the function information indicating the projection function of the projector 14 from the QR code, the application of the smartphone 11 displays the screen page indicating that downloading is being carried out to the user, as shown in FIG. 13, for example.

It is noted that, timing of displaying the QR code by the projector 14, timing of providing the file list from the information storage apparatus 10 to the smartphone 11 and timing of reading information by the smartphone 11 from the QR code displayed by the projector 14 are not limited to the order shown in the sequence diagram of FIG. 19.

In step S37, the application of the smartphone 11 determines, as shown in FIG. 18, a file format depending on the function information that the application of the smartphone 11 has read from the QR code. For example, when the function information includes the projection function, the application of the smartphone 11 determines the file format as PDF or the like which can be projected by the projector 14.

The processes of steps S38, S39 and S40 are the same as those of steps S8, S9 and S10 of FIG. 4, and thus, duplicate description will be omitted. In step S41, the application of the smartphone 11 transmits the converted file to the projector 14 as a projection file. It is noted that the smartphone 11 can also store the converted file that has been obtained from the information storage apparatus 10. A specific method of transmitting a projection file to the projector 14 is, for example, a method of transmitting it using a WebApi that is published by the projector 14, as shown in FIG. 21. FIG. 21 illustrates one example of a method of transmitting a projection file to the projector 14. When having received the projection file, the projector 14 carries out projection (output) based on the projection file, in step S42.

Further, in order to display the QR code, the projector 14 can project a screen page including the QR code 1300 as shown in FIG. 22 on the projection screen 141 or the like, or it is also possible to affix a seal of the QR code 1301 onto the housing of the projector 14, for example. FIG. 22 is an image diagram of one example of a QR code to be displayed by the projector 14. For example, the projector 14 can thus project the QR code 1300 by displaying via a Web browser (not shown) the QR code display Web UI 25 of the information storage apparatus 10. Further, it is possible that the projector 14 stores image data of the QR code 1300 in the projector 14 itself, or obtains image data of the QR code 1300 from the outside.

Other than affixing a seal of the QR code 1301 on the housing of the projector 14, it is also possible to affix a seal of the QR code 1301 on, for example, a wall of a room in which the projector 14 is installed. In other words, a specific position to affix a seal of the QR code 1301 is preferably a position such that a user can understand that the QR code 1301 is one that is associated with the projector 14.

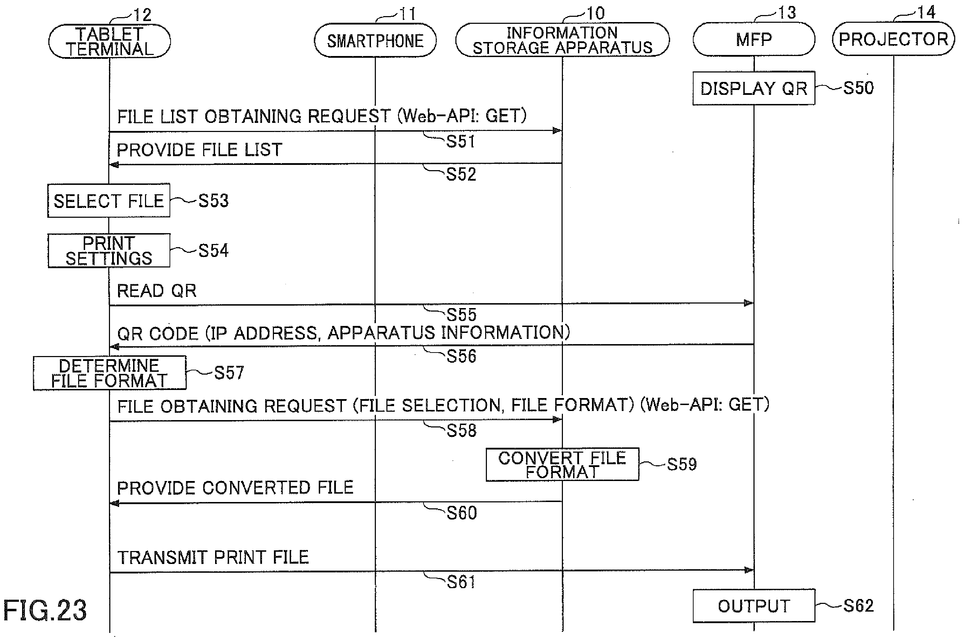

In the sequence diagram of FIG. 4, the processes have been shown for a case of obtaining a file from the information storage apparatus 10 using the smartphone 11 and printing the file by the MFP 13. However, the service providing system 1 according to the first embodiment can also be used for a case of, as shown in a sequence diagram of FIG. 23, using the tablet terminal 12 to obtain a file from the information storage apparatus 10 and print the file by the MFP 13.

FIG. 23 is a sequence diagram of yet another example of a procedure of the service providing system 1 according to the first embodiment. Since processes of step S50 and steps from S51 to S62 in the sequence diagram of FIG. 23 are the same as those of step S0 and steps from S1 to S12 of FIG. 4 except that the role of the smartphone 11 in the procedure of FIG. 4 is replaced by the tablet terminal 12 in the procedure of FIG. 23, description will be omitted.

Further, in the sequence diagram of FIG. 19, the processes have been shown for a case of obtaining a file from the information storage apparatus 10 using the smartphone 11 and projecting the file by the projector 14. However, the service providing system 1 according to the first embodiment can also be used for a case of, in the same manner as the case of FIG. 23, using the tablet terminal 12 to obtain a file from the information storage apparatus 10 and project the file by the projector 14 instead of printing the file by the MFP 13.

### [Second Embodiment]

A service providing system 1 according to the second embodiment has the same system configuration, hardware configuration and software configuration as those of the service providing system 1 according to the first embodiment described above. Thus, the description of the system configuration, hardware configuration and software configuration will be omitted.

### <Details of Processing>

Below, processing of the service providing system 1 according to the second embodiment will be described in detail.

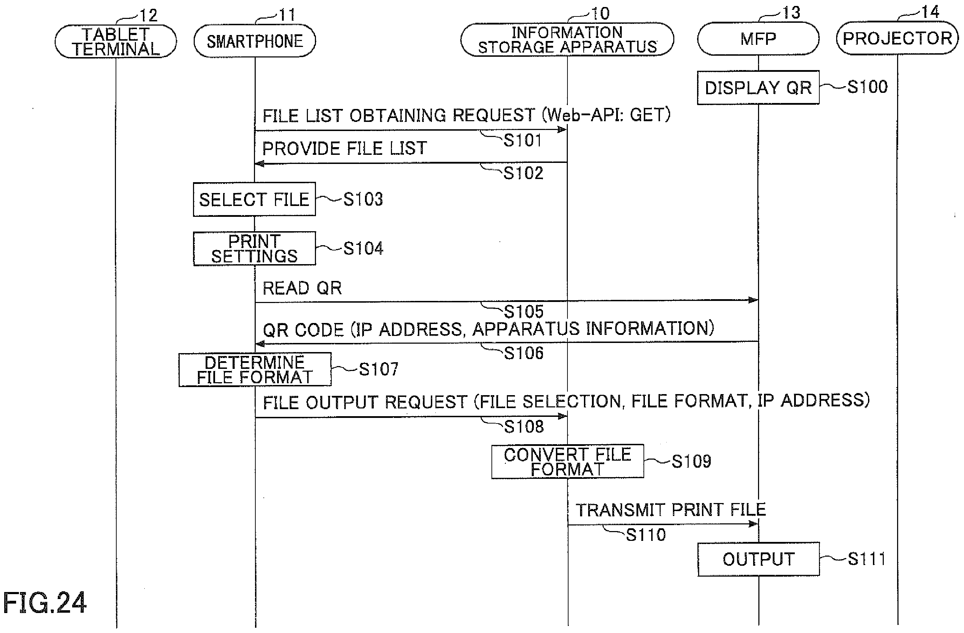

Here, processes will now be described for a case of using the smartphone 11 and causing the MFP 13 to print a file that the information storage apparatus 10 stores. FIG. 24 is a sequence diagram showing one example of a procedure of the service providing system 1 according to the second embodiment. Processes of step S100 and steps from S101 to S107 of FIG. 24 are the same as those of step S0 and steps from S1 to S7 of FIG. 4, and thus, the duplicate description therefor will be omitted.

In step S108, the application of the smartphone 11 sends a file output request to the information storage apparatus 10. The file output request includes information of the file selection, information of the file format determined in step S107 and the IP address of the MFP 13.

In Step S109, the WebApi 26 of the information storage apparatus 10 then receives the file output request and sends a corresponding file output request to the Web control part 29. The Web control part 29 then obtains the file from the shared folder 27 based on the "information of the file selection" included in the file output request thus received from the WebApi 26.

Further, the Web control part 29 determines, based on the "information of the file format" included in the file output request from the WebApi 26, whether it is necessary to convert the file format of the file thus obtained from the shared folder 27. For example, when the file format of the file obtained from the shared folder 27 and the file format indicated by the "information of the file format" obtained from the WebApi 26 are the same, the Web control part 29 determines that conversion of the file format of the file obtained from the shared folder 27 is not necessary.

On the other hand, when the file format of the file obtained from the shared folder 27 and the file format indicated by the "information of the file format" obtained from the WebApi 26 are different from one another, the Web control part 29 determines that conversion of the file format of the file obtained from the shared folder 27 is necessary. When having determined that it is necessary to convert the file format, the Web control part 29 causes the document management part 28 to convert the file format into the file format indicated by the "information of the file format". Below, a case where the Web control part 29 has determined that it is necessary to convert the file format will be described. The Web control part 29 then returns the converted file, the file format of which has been thus converted, to the WebApi 26.

In step S110, the WebApi 26 transmits the converted file to the MFP 13 as a print file. A specific method of thus transmitting the print file to the MFP 13 is, for example, a method of transmitting it using a socket communication to the port of the number 9100 ("port 9100") of the MFP 13, as shown in FIG. 14. When having received the print file, the MFP 13 carries out print (output) based on the print file, in step S111.

According to the sequence diagram of FIG. 24, it is possible to display on the smartphone 11 the files placed in the shared folder 27 of the information storage apparatus 10, by installing the WebApi 26 in the information storage apparatus 10. Also, it is possible that a file format that can be printed by the MFP 13 is designated and a file is printed by the MFP 13 as a result of the user selecting the file from those displayed on the smartphone 11 and reading via the smartphone 11 information from the QR code 1201 of the MFP 13 that the user wishes to use to print the file.

Thus, a user can cause the information storage apparatus 10, the smartphone 11 and the MFP 13 to operate in cooperation with each other by holding the smartphone 11 against the MFP 13 at a time of starting print (to cause the smartphone 11 to read information from the QR code of the MFP 13), and thus, the user can easily print by the MFP 13 a file placed in the shared folder 27 of the information storage apparatus 10.

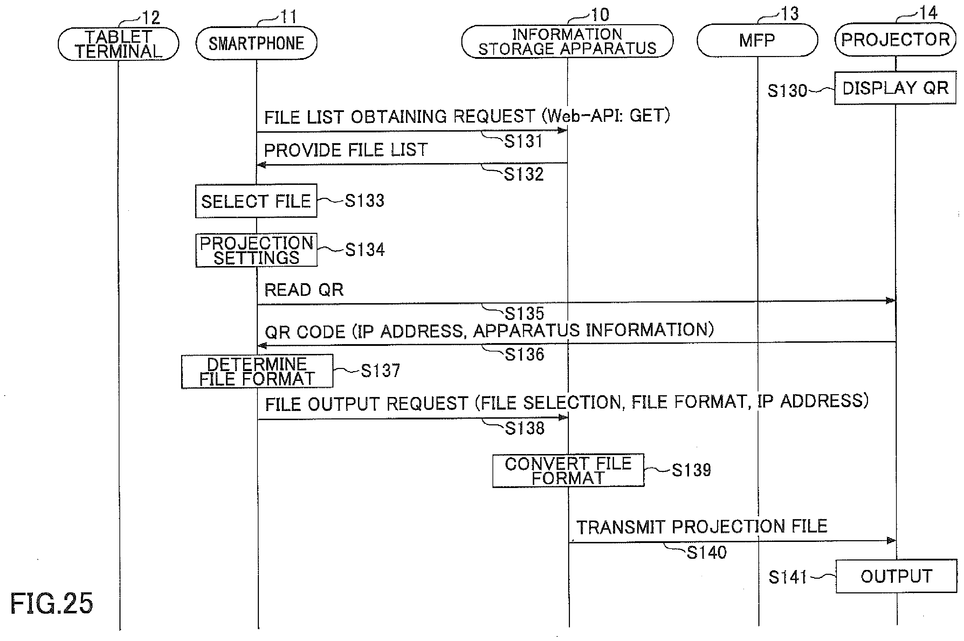

The sequence diagram of FIG. 24 shows the processes of causing a file to be transmitted from the information storage apparatus 10 to the MFP 13 using the smartphone 11, and printing the file by the MFP 13. The service providing system 1 according to the second embodiment can also be used, as shown in the sequence diagram of FIG. 25, to cause a file to be transmitted from the information storage apparatus 10 to the projector 14 using the smartphone 11, and project the file by the projector 14.

FIG. 25 is the sequence diagram of another example showing a procedure of the service providing system according to the second embodiment. It is noted that the processes of steps S130, S131, S132 and S133 are the same as those of steps S100, S101, S102 and S103 of FIG. 24, and thus, duplicate description will be omitted.

When a "projection settings" button (not shown) has been pressed on the file detail display screen page 1060 of FIG. 9, the smartphone 11 displays the projection setting screen page in step S134. The user then operates the smartphone 11 and carries out settings for projection to be carried out by the projector 14 via the thus displayed projection setting screen page.

After selecting a file to be projected by the projector 14 from files shown in FIG. 8 or 9, the user presses the "QR" button 1062 on the file detail display screen page 1060 of FIG. 9. Thereby, the user can cause the smartphone 11 to display the QR code reading screen page 1150 as shown in FIG. 11, for example.

In steps S135 and S136, the user operates the smartphone 11, and adjusts a positional relationship between the QR code displayed by the projector 14 (onto the projection screen 141 or the like) and the smartphone 11 so that the QR code taken by the camera function of the smartphone 11 will be displayed in the QR code display area 1151 of the QR code reading screen page 1150 displayed on the smartphone 11.

The application of the smartphone 11 reads, from the QR code taken by the camera function, the IP address of the projector 14, the projector name, the function information indicating the projection function that the projector 14 provides, and the type of the projector 14 as shown in FIG. 20.

It is noted that, timing of displaying the QR code by the projector 14, timing of providing the file list from the information storage apparatus 10 to the smartphone 11 and timing of reading information by the smartphone 11 from the QR code displayed by the projector 14 are not limited to the order shown in the sequence diagram of FIG. 25.

In step S137, the application of the smartphone 11 determines, as shown in FIG. 18, a file format depending on the function information that the application of the smartphone 11 has read from the QR code. For example, when the function information includes the projection function, the application of the smartphone 11 determines the file format as PDF or the like which can be projected by the projector 14.

In step S138, the application of the smartphone 11 sends a file output request to the information storage apparatus 10. The file output request includes information of the file selection, information of the file format determined in step S137 and the IP address of the projector 14.

In Step S139, the WebApi 26 of the information storage apparatus 10 then receives the file output request and sends a corresponding file output request to the Web control part 29. The Web control part 29 obtains the file from the shared folder 27 based on the "information of the file selection" included in the file output request thus received from the WebApi 26.

Further, the Web control part 29 determines, based on the "information of the file format" included in the file output request from the WebApi 26, whether it is necessary to convert the file format of the file thus obtained from the shared folder 27. For example, when the file format of the file obtained from the shared folder 27 and the file format indicated by the "information of the file format" obtained from the WebApi 26 are the same, the Web control part 29 determines that conversion of the file format of the file obtained from the shared folder 27 is not necessary.

On the other hand, when the file format of the file obtained from the shared folder 27 and the file format indicated by the "information of the file format" obtained from the WebApi 26 are different from one another, the Web control part 29 determines that conversion of the file format of the file obtained from the shared folder 27 is necessary. When having determined that it is necessary to convert the file format, the Web control part 29 causes the document management part 28 to convert the file format into the file format indicated by the "information of the file format". Below, a case where the Web control part 29 has determined that it is necessary to convert the file format will be described. The Web control part 29 then returns the converted file, the file format of which has been thus converted, to the WebApi 26.

In step S140, the WebApi 26 transmits the converted file to the projector 14 as a projection file. A specific method of thus transmitting the projection file to the projector 14 is, for example, a method of transmitting it using a WebApi that is published by the projector 14, as shown in FIG. 21. When having received the projection file, the projector 14 carries out projection (output) based on the projection file, in step S141.

According to the sequence diagram of FIG. 25, it is possible to display, on the smartphone 11, the files placed in the shared folder 27 of the information storage apparatus 10, by installing the WebApi 26 in the information storage apparatus 10. Also, it is possible that a file format that can be projected by the projector 14 is designated and a file is projected by the projector 14, as a result of the user selecting the file from those displayed on the smartphone 11 and reading information from the QR code 1300, 1301 or the like of the projector 14 that the user wishes to use to project the file.

Thus, a user can cause the information storage apparatus 10, the smartphone 11 and the projector 14 to operate in cooperation with each other by holding the smartphone 11 against the projection screen 141 or the like of the projector 14 at a time of starting projection to cause the smartphone 11 to read information from the QR code displayed onto the projection screen 141 or the like by the projector 14, and thus, the user can easily project from the projector 14 a file placed in the shared folder 27 of the information storage apparatus 10.

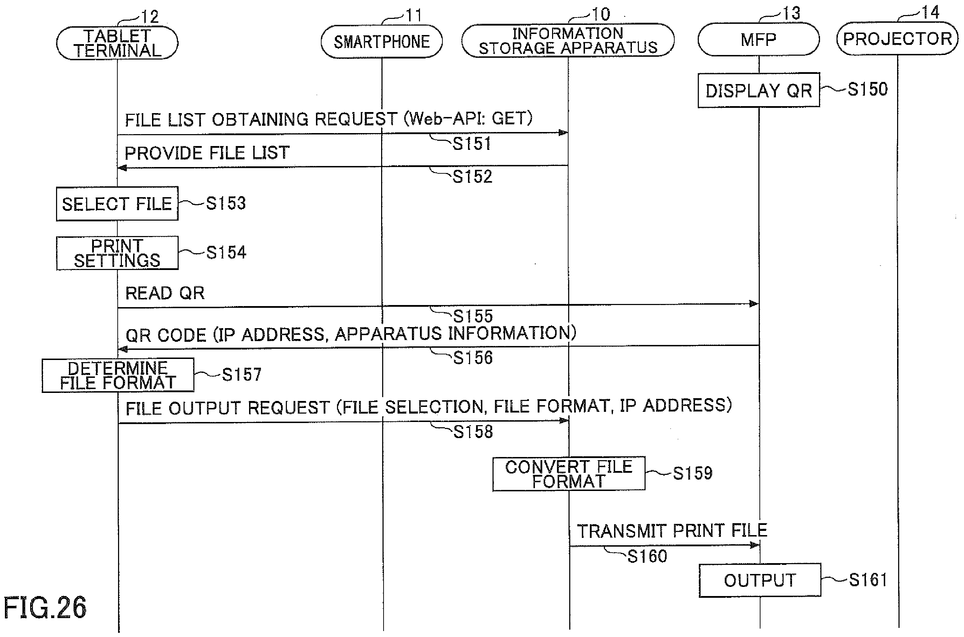

The sequence diagram of FIG. 24 shows the processes of causing a file to be transmitted from the information storage apparatus 10 to the MFP 13 using the smartphone 11, and printing the file by the MFP 13. The service providing system 1 according to the second embodiment can also be used, as shown in the sequence diagram of FIG. 26, to cause a file to be transmitted from the information storage apparatus 10 to the MFP 13 using the tablet terminal 12, and printing the file by the MFP 13.

FIG. 26 is the sequence diagram of yet another example showing a procedure of the service providing system according to the second embodiment. It is noted that the processes of step S150 and steps from S151 to S161 in the sequence diagram of FIG. 26 are the same as those of step S100 and steps from S101 to S111 of FIG. 24 except that the role of the smartphone 11 in the procedure of FIG. 24 is replaced by the tablet terminal 12 in the procedure of FIG. 26, and thus, duplicate description will be omitted.

Further, in the sequence diagram of FIG. 25, the processes have been shown for a case of causing a file to be transmitted from the information storage apparatus 10 to the projector 14 using the smartphone 11 and projecting the file by the projector 14. However, the service providing system 1 according to the second embodiment can also be used for a case of, in the same manner as the case of FIG. 26, using the tablet terminal 12, instead of the smartphone 11, to cause a file to be transmitted from the information storage apparatus 10 to the projector 14 and project the file by the projector 14.

According to the sequence diagram of FIG. 26, it is possible to display, on the tablet terminal 12, the files placed in the shared folder 27 of the information storage apparatus 10, by installing the WebApi 26 in the information storage apparatus 10. Also, it is possible that a file format that can be printed by the MFP 13 is designated and a file is printed by the MFP 13, as a result of the user selecting the file from those displayed on the tablet terminal 12 and reading information from the QR code 1201 of the MFP 13 that the user wishes to use to print the file.

Thus, a user can cause the information storage apparatus 10, the tablet terminal 12 and the MFP 13 to operate in cooperation with each other by holding the tablet terminal 12 against the MFP 13 at a time of starting print to cause the tablet terminal 12 to read information from the QR code displayed on the MFP 13, and thus, the user can easily print, by the MFP 13, a file placed in the shared folder 27 of the information storage apparatus 10.

Further, also it is naturally possible to use a facsimile function that the MFP 13 has, and transmit data stored in the information storage apparatus 10 by fax. In this case, in step S159 of FIG. 28, facsimile transmission conditions are set instead of setting print conditions (print settings).

The facsimile transmission conditions include, for example, whether to attach a letter of transmittal, transmission result notification destination, whether to print date and time, transmission source information, transmission destination information and/or the like. Further, it is also possible to use, for the facsimile transmission conditions, information of another application that is installed and operates in the smartphone 11. For example, it is possible for a user to select a destination telephone number from among data that is managed by the other application prepared for managing addresses.

The information storage apparatus 10 generates facsimile transmission image data according to the received facsimile transmission conditions (facsimile transmission settings). It is noted that the information storage apparatus 10 can use facsimile transmission image data that is previously generated, or can generate facsimile transmission image data after receiving a facsimile transmission instruction from the smartphone 11.

The thus generated facsimile transmission image data is then transmitted to the MFP 13 from the information storage apparatus 10. the MFP 13 transmits the received facsimile transmission image data to the destination.

Further, in addition to displaying data stored in the information storage apparatus 10 on the smartphone 11, it is also possible that data stored in the information storage apparatus 10 is also stored in the smartphone 11.

### <Summary of Embodiments>

Thus, according to the service providing systems 1 according to the embodiments, a user can obtain advantageous effects as follows. That is, by holding an information processing apparatus such as the smartphone 11 or the tablet terminal 12 against an electronic apparatus such as the MFP 13 or the projector 14 and obtaining information for identifying the electronic apparatus such as a QR code, the user can cause a cooperative processing apparatus such as the information storage apparatus 10, the information processing apparatus and the electronic apparatus to operate in cooperation with each other, and receive various services using the electronic apparatus.

Further, the service providing systems 1 according to the embodiments can provide various services, as a result of an electronic apparatus such as the MFP 13 or the projector 14, an information processing apparatus such as the smartphone 11 or the tablet terminal 12 and a cooperative processing apparatus such as the information storage apparatus 10 operating in cooperation with each other by a cooperation method depending on the respective services such as print, projection and scan to be provided.

Further, a cooperation method concerning a new service to be provided by an electronic apparatus such as the MFP 13, the projector 14 or another new electronic apparatus can be previously defined in the service providing systems according to the embodiments. Thereby, it is possible to cause an electronic apparatus such as the MFP 13, the projector 14 or another new apparatus, an information processing apparatus such as the smartphone 11 or the tablet terminal 12 and a cooperative processing apparatus such as the information storage apparatus 10 to operate in cooperation with each other by the cooperation method depending on the new service. Thus, it is possible to provide the new service in addition to existing services.

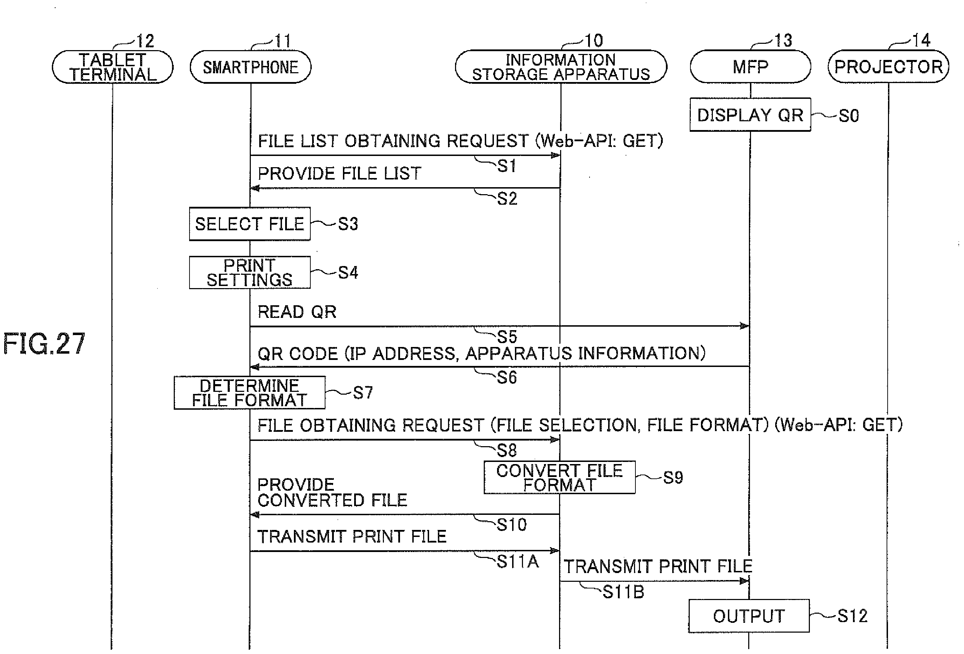

For example, in the service providing systems according to the embodiments, it is possible to previously define such that the process shown in the sequence diagram of FIG. 4 is to be carried out in a case where the MFP 13 has a function of directly communicating with the smartphone 11. Further, in the service providing systems according to the embodiments, it is possible to previously define such that the information storage apparatus 10 is caused to carry out communication with the MFP 13 as shown in FIG. 27, in a case where the MFP 13 does not have a function of directly communicating with the smartphone 11. Thus, in the service providing systems according to the embodiments, it is possible to change a process(es) depending on whether the MFP 13 has a function of directly communicating with the smartphone 11. Thus, it is possible to provide a service(s) depending on various MFPs 13.

It is noted FIG. 27 is the same as FIG. 4, except that step S11 of FIG. 4 is replaced by steps S11A and S11B in FIG. 27. That is, according to the sequence of FIG. 27, the process of transmitting a print file to the MFP 13 is carried out in such a manner that, first the print file (print data) is transmitted from the smartphone 11 to the information storage apparatus 10 (in step S11A), which then transmits the same to the MFP 13 (in step S11B).

Thus, according to the service providing systems, the service providing methods, and the non-transitory computer readable information recording media of the embodiments, apparatuses included in the system operate in cooperation with each other to provide a service(s).

Although the service providing systems, the service providing methods, and the non-transitory computer readable information recording media have been described by the embodiments, the present invention is not limited to the specifically disclosed embodiments, and variations and modifications may be made without departing from the scope of the present invention as claimed.

## Claims

1. A service providing system comprising:
an information storage apparatus (10) which includes a storage part that stores electronic data; and
an operation terminal (11,12) which is connected with the information storage apparatus,
wherein the service providing system is configured to carry out an output service of outputting electronic data stored in the storage part using one electronic apparatus from among a plurality of electronic apparatuses including a projector (14) and a multifunction peripheral (13);
wherein the operation terminal (11, 12) is configured to function as
a first obtaining part that obtains identification information for identifying the one electronic apparatus from among the plurality of electronic apparatuses based on information that is input in response to an operation performed on the one electronic apparatus,
a second obtaining part that obtains a list of the electronic data stored in the information storage apparatus,
a display part that displays the list of the electronic data obtained by the second obtaining part,
a reception part that receives selection of one electronic data in the list of the electronic that is to be output,
a transmitting part that transmits requests to the information storage apparatus, and
an output control part that outputs the one electronic data; and
the information storage apparatus (10) is configured to function as:
a conversion part that converts the file format of the one electronic data,
an output control part that outputs the one electronic data, and
a transmitting part that transmits the one electronic data or the file-format-converted one electronic data to the operation terminal,
wherein the service providing system is configured such that:
in a case where the operation terminal can directly communicate with the one electronic apparatus in which the one electronic apparatus is a projector:
the operation terminal transmitting part transmits a request to the information storage apparatus for requesting the information storage apparatus to obtain the one electronic data in a file format that can be projected by the projector,
when the information storage apparatus receives the request to the information storage apparatus for obtaining the one electronic data in a case where the file format of the one electronic data is different from a file format that is requested, the information storage apparatus conversion part converts the file format of the one electronic data into the file format that is requested,
the information storage apparatus transmitting part transmits the converted file to the operation terminal,
the operation terminal output control part transmits the converted file transmitted from the information storage apparatus (10) as a projecting file to the projector, and
instructs the projector to output the one electronic data in the file format that can be projected by the projector;
in a case where the operation terminal can directly communicate with the one electronic apparatus in which the one electronic apparatus is a multifunction peripheral:
the transmitting part transmits a request to the information storage apparatus for requesting the information storage apparatus to obtain the one electronic data in a file format that can be printed by the multifunction peripheral,
when the information storage apparatus receives the request to the information storage apparatus for obtaining the one electronic data in a case where the file format of the one electronic data is different from a file format that is requested, the information storage apparatus conversion part converts the file format of the one electronic data into the file format that is requested,
the information storage apparatus transmitting part transmits the converted file to the operation terminal,
the operation terminal output control part transmits the converted file transmitted from the information storage apparatus (10) as a printing file to the multifunction peripheral, and
instructs the multifunction peripheral to output the one electronic data in the file format that can be printed by the multifunction peripheral;
in a case where the operation terminal cannot directly communicate with the one electronic apparatus:
the transmitting part transmits an output request to the information storage apparatus for outputting the one electronic data, the output request including the identification information obtained by the first obtaining part identification information of the one electronic data,
information of a selected file format, and an IP address of the electronic apparatus when the information storage apparatus receives the output request from the operation terminal in a case where the electronic apparatus identified by the identification information is the projector (14), the information storage output control part instructs the information storage converting part to convert the one electronic data into the file format that can be projected by the projector and instructs the projector to output the file-format-converted one electronic data, and
wherein when the information storage apparatus (10) receives the output request from the operation terminal in a case where the electronic apparatus identified by the identification information is the multifunction peripheral (13), the information storage output control part instructs the information storage converting part to convert the one electronic data into the file format that can be printed by the multifunction peripheral and instructs the multifunction peripheral to output the file-format-converted one electronic data.

2. The service providing system as claimed in claim 1, wherein
the operation terminal output control part transmits the electronic data, and transmits output settings for causing the electronic apparatus to output the electronic data.

3. The service providing system as claimed in claim 1 or claim 2, wherein
the operation terminal (11, 12) includes a photographing part configured to photograph, and
the determination part is configured to determine the one electronic apparatus from among the plurality of electronic apparatuses based on information included in image data photographed by the photographing part as the information being input from the outside of the operation terminal.

4. The service providing system as claimed in claim 3, wherein
the determination part inputs the image data by photographing, using the photographing part, an image that is displayed by the one electronic apparatus.

5. A service providing method of controlling operations of an operation terminal (11, 12) connected with an information storage apparatus (10) that includes a storage part storing electronic data, and providing an output service of outputting electronic data stored in the storage part using one electronic apparatus from among a plurality of electronic apparatuses including a projector (14) and a multifunction peripheral (13); the service providing method comprising using the operation terminal to:
obtain identification information for identifying the one electronic apparatus from among the plurality of electronic apparatuses based on information that is input in response to an operation performed on the one electronic apparatus,
obtain a list of the electronic data stored in the information storage apparatus, display the list of the electronic data obtained by the second obtaining part,
receive selection of one electronic data in the list of the electronic that is to be output,
transmit requests to the information storage apparatus, and
output the one electronic data;
and using the information storage apparatus (10) to:
convert the file format of the one electronic data,
output the one electronic data, and
transmit the one electronic data or the file-format-converted one electronic data to the operation terminal,
wherein, in a case where the operation terminal can directly communicate with the one electronic apparatus in which the one electronic apparatus is a projector, the method comprises:
transmitting a request from the operation terminal to the information storage apparatus for requesting the information storage apparatus to obtain the one electronic data in a file format that can be projected by the projector,
receiving, at the information storage apparatus the request to the information storage apparatus for obtaining the one electronic data in a case where the file format of the one electronic data is different from a file format that is requested, converting the file format of the one electronic data into the file format that is requested,
transmitting the converted file from the information storage apparatus to the operation terminal,
transmitting, from the operation terminal the converted file transmitted from the information storage apparatus (10) as a projecting file to the projector, and
instructing the projector to output the one electronic data in the file format that can be projected by the projector;
in a case where the operation terminal can directly communicate with the one electronic apparatus in which the one electronic apparatus is a multifunction peripheral:
transmitting a request from the operation terminal to the information storage apparatus for requesting the information storage apparatus to obtain the one electronic data in a file format that can be projected by the projector,
receiving, at the information storage apparatus the request to the information storage apparatus for obtaining the one electronic data in a case where the file format of the one electronic data is different from a file format that is requested, converting the file format of the one electronic data into the file format that is requested,
transmitting the converted file from the information storage apparatus to the operation terminal,
transmitting, from the operation terminal the converted file transmitted from the information storage apparatus (10) as a printing file to the multifunctional peripheral, and
instructing the multifunctional peripheral to output the one electronic data in the file format that can be printed by the projector;
in a case where the operation terminal cannot directly communicate with the one electronic apparatus:
transmitting, from the operation terminal an output request to the information storage apparatus for outputting the one electronic data, the output request including the identification information obtained by the first obtaining part identification information of the one electronic data, information of a selected file format, and an IP address of the electronic apparatus receiving at the information storage apparatus the output request from the operation terminal
wherein, in a case where the electronic apparatus identified by the identification information is the projector (14), the method further comprises:
instructing the information storage converting part to convert the one electronic data into the file format that can be projected by the projector and instructing the projector to output the file-format-converted one electronic data, and
in a case where the electronic apparatus identified by the identification information is the multifunction peripheral (13), the method further comprises:
instructing the information storage converting part to convert the one electronic data into the file format that can be printed by the multifunction peripheral and instructing the multifunction peripheral to output the file-format-converted one electronic data.

6. The service providing method of controlling operations of the operation terminal as claimed in claim 5, wherein
in the transmitting step, the electronic data is transmitted, and output settings for causing the electronic apparatus to output the electronic data are transmitted.

7. A non-transitory computer readable information recording medium storing an application which, when executed by one or more processors, controls an operation terminal to perform all the steps of the method of claim 5 or claim 6.

## Patentansprüche

1. Dienstbereitstellungssystem, umfassend:
eine Informationsspeichervorrichtung (10), die einen Speicherteil einschließt, der elektronische Daten speichert; und
ein Bedienterminal (11, 12), das mit der Informationsspeichervorrichtung verbunden ist,
worin das Dienstbereitstellungssystem dafür konfiguriert ist, einen Ausgabedienst zum Ausgeben von im Speicherteil gespeicherten elektronischen Daten unter Verwendung einer elektronischen Vorrichtung aus einer Vielzahl von elektronischen Vorrichtungen, die einen Projektor (14) und ein Multifunktionsperipheriegerät (13) einschließt, auszuführen;
worin das Bedienterminal (11, 12) dafür konfiguriert ist, als eines von Folgendem zu fungieren:
ein erster Erlangungsteil, der Identifizierungsinformation zum Identifizieren der einen elektronischen Vorrichtung aus der Vielzahl von elektronischen Vorrichtungen auf der Grundlage von Information erlangt, die als Antwort auf eine auf der einen elektronischen Vorrichtung durchgeführte Operation eingegeben wird,
ein zweiter Erlangungsteil, der eine Liste der in der Informationsspeichervorrichtung gespeicherten elektronischen Daten erlangt,
ein Anzeigeteil, der die Liste der durch den zweiten Erlangungsteil erlangten elektronischen Daten anzeigt,
ein Empfangsteil, der eine Auswahl eines elektronischen Datenelements in der Liste der elektronischen Daten, die auszugeben ist, empfängt,
ein Übertragungsteil, der Anforderungen zur Informationsspeichervorrichtung überträgt, und
ein Ausgabesteuerungsteil, der das eine elektronische Datenelement ausgibt; und
die Informationsspeichervorrichtung (10) dafür konfiguriert ist, als eines von Folgendem zu fungieren:
ein Konvertierungsteil, der das Dateiformat des einen elektronischen Datenelements konvertiert,
ein Ausgabesteuerungsteil, der das eine elektronische Datenelement ausgibt, und
ein Übertragungsteil, der das eine elektronische Datenelement oder das im Dateiformat konvertierte eine elektronische Datenelement zum Bedienterminal überträgt,
worin das Dienstbereitstellungssystem so konfiguriert ist, dass:
in einem Fall, in dem das Bedienterminal direkt mit der einen elektronischen Vorrichtung kommunizieren kann, worin die eine elektronische Vorrichtung ein Projektor ist:
der Bedienterminal-Übertragungsteil eine Anforderung zur Informationsspeichervorrichtung überträgt, um die Informationsspeichervorrichtung aufzufordern, das eine elektronische Datenelement in einem Dateiformat zu erlangen, das durch den Projektor projiziert werden kann,
wenn die Informationsspeichervorrichtung die Anforderung an die Informationsspeichervorrichtung zum Erlangen des einen elektronischen Datenelements in einem Fall empfängt, in dem das Dateiformat des einen elektronischen Datenelements sich von einem Dateiformat unterscheidet, das angefordert wird, der Informationsspeichervorrichtung-Konvertierungsteil das Dateiformat des einen elektronischen Datenelements in das Dateiformat konvertiert, das angefordert wird,
der Informationsspeichervorrichtung-Übertragungsteil die konvertierte Datei zum Bedienterminal überträgt,
der Bedienterminal-Ausgabesteuerungsteil die von der Informationsspeichervorrichtung (10) übertragene konvertierte Datei als eine Projektionsdatei zum Projektor überträgt, und
den Projektor anweist, das eine elektronische Datenelement in dem Dateiformat auszugeben, das durch den Projektor projiziert werden kann;
in einem Fall, in dem das Bedienterminal direkt mit der einen elektronischen Vorrichtung kommunizieren kann, worin die eine elektronische Vorrichtung ein Multifunktionsperipheriegerät ist:
der Bedienterminal-Übertragungsteil eine Anforderung zur Informationsspeichervorrichtung überträgt, um die Informationsspeichervorrichtung aufzufordern, das eine elektronische Datenelement in einem Dateiformat zu erlangen, das durch das Multifunktionsperipheriegerät gedruckt werden kann;
wenn die Informationsspeichervorrichtung die Anforderung an die Informationsspeichervorrichtung zum Erlangen des einen elektronischen Datenelements in einem Fall empfängt, in dem das Dateiformat des einen elektronischen Datenelements sich von einem Dateiformat unterscheidet, das angefordert wird, der Informationsspeichervorrichtung-Konvertierungsteil das Dateiformat des einen elektronischen Datenelements in das Dateiformat konvertiert, das angefordert wird,
der Informationsspeichervorrichtung-Übertragungsteil die konvertierte Datei zum Bedienterminal überträgt,
der Bedienterminal-Ausgabesteuerungsteil die von der Informationsspeichervorrichtung (10) übertragene konvertierte Datei als eine Druckdatei zum Multifunktionsperipheriegerät überträgt, und
das Multifunktionsperipheriegerät anweist, das eine elektronische Datenelement in dem Dateiformat auszugeben, das durch das Multifunktionsperipheriegerät gedruckt werden kann;
in einem Fall, in dem das Bedienterminal nicht direkt mit der einen elektronischen Vorrichtung kommunizieren kann:
der Übertragungsteil eine Ausgabeanforderung zum Ausgeben des einen elektronischen Datenelements zur Informationsspeichervorrichtung überträgt, wobei die Ausgabeanforderung die durch den ersten Erlangungsteil erlangte Identifizierungsinformation, Identifizierungsinformation des einen elektronischen Datenelements, Information eines ausgewählten Dateiformats und eine IP-Adresse der elektronischen Vorrichtung einschließt,
wenn die Informationsspeichervorrichtung die Ausgabeanforderung vom Bedienterminal in einem Fall empfängt, in dem die durch die Identifizierungsinformation identifizierte elektronische Vorrichtung der Projektor (14) ist, der Informationsspeicher-Ausgabesteuerungsteil den Informationsspeicher-Konvertierungsteil anweist, das eine elektronische Datenelement in das Dateiformat zu konvertieren, das durch den Projektor projiziert werden kann, und den Projektor anweist, das in das Dateiformat konvertierte eine elektronische Datenelement auszugeben, und
wobei, wenn die Informationsspeichervorrichtung (10) die Ausgabeanforderung vom Bedienterminal in einem Fall empfängt, in dem die durch die Identifizierungsinformation identifizierte elektronische Vorrichtung das Multifunktionsperipheriegerät (13) ist, der Informationsspeicher-Ausgabesteuerungsteil den Informationsspeicher-Konvertierungsteil anweist, das eine elektronische Datenelement in das Dateiformat zu konvertieren, das durch das Multifunktionsperipheriegerät gedruckt werden kann, und das Multifunktionsperipheriegerät anweist, das in das Dateiformat konvertierte eine elektronische Datenelement auszugeben.

2. Dienstbereitstellungssystem nach Anspruch 1, worin
der Bedienterminal-Ausgabesteuerungsteil die elektronischen Daten überträgt und Ausgabeeinstellungen zum Bewirken, dass die elektronische Vorrichtung die elektronischen Daten ausgibt, überträgt.

3. Dienstbereitstellungssystem nach Anspruch 1 oder Anspruch 2, worin
das Bedienterminal (11, 12) einen zum Fotografieren konfigurierten Fotografierteil einschließt, und
der Bestimmungsteil dafür konfiguriert ist, die eine elektronische Vorrichtung aus der Vielzahl von elektronischen Vorrichtungen zu bestimmen, und zwar auf der Grundlage von Information, die in durch den Fotografierteil fotografierte Bilddaten eingeschlossen ist, als die von außerhalb des Bedienterminals eingegebene Information.

4. Dienstbereitstellungssystem nach Anspruch 3, worin
der Bestimmungsteil die Bilddaten durch Fotografieren eines Bildes, das durch die eine elektronische Vorrichtung angezeigt wird, unter Verwendung des Fotografierteils eingibt.

5. Dienstbereitstellungsverfahren zum Steuern der Operationen eines Bedienterminals (11, 12), das mit einer Informationsspeichervorrichtung (10) verbunden ist, die einen Speicherteil einschließt, der elektronische Daten speichert, und zum Bereitstellen eines Ausgabedienstes zum Ausgeben von im Speicherteil gespeicherten elektronischen Daten unter Verwendung einer elektronischen Vorrichtung aus einer Vielzahl von elektronischen Vorrichtungen, die einen Projektor (14) und ein Multifunktionsperipheriegerät (13) einschließt;
wobei das Dienstbereitstellungsverfahren umfasst: Verwenden des Bedienterminals, um:
Identifizierungsinformation zum Identifizieren der einen elektronischen Vorrichtung aus der Vielzahl von elektronischen Vorrichtungen auf der Grundlage von Information zu erlangen, die als Antwort auf eine auf der einen elektronischen Vorrichtung durchgeführte Operation eingegeben wird,
eine Liste der in der Informationsspeichervorrichtung gespeicherten elektronischen Daten zu erlangen,
die Liste der durch den zweiten Erlangungsteil erlangten elektronischen Daten anzuzeigen,
eine Auswahl eines elektronischen Datenelements in der Liste der elektronischen Daten, die auszugeben ist, zu empfangen,
Anforderungen zur Informationsspeichervorrichtung zu übertragen, und
das eine elektronische Datenelement auszugeben; und
und Verwenden der Informationsspeichervorrichtung (10), um:
das Dateiformat des einen elektronischen Datenelements zu konvertieren,
das eine elektronische Datenelement auszugeben, und
das eine elektronische Datenelement oder das in das Dateiformat konvertierte eine elektronische Datenelement zum Bedienterminal zu übertragen,
worin in einem Fall, in dem das Bedienterminal direkt mit der einen elektronischen Vorrichtung kommunizieren kann, worin die eine elektronische Vorrichtung ein Projektor ist, das Verfahren umfasst:
Übertragen einer Anforderung vom Bedienterminal zur Informationsspeichervorrichtung, und zwar zum Auffordern der Informationsspeichervorrichtung, das eine elektronische Datenelement in einem Dateiformat zu erlangen, das durch den Projektor projiziert werden kann,
Empfangen der Anforderung an die Informationsspeichervorrichtung zum Erlangen des einen elektronischen Datenelements in der Informationsspeichervorrichtung in einem Fall, in dem das Dateiformat des einen elektronischen Datenelements sich von einem Dateiformat unterscheidet, das angefordert wird, Konvertieren des Dateiformats des einen elektronischen Datenelements in das Dateiformat, das angefordert wird,
Übertragen der konvertierten Datei von der Informationsspeichervorrichtung zum Bedienterminal,
Übertragen der von der Informationsspeichervorrichtung (10) übertragenen konvertierten Datei als eine Projektionsdatei vom Bedienterminal zum Projektor, und
Anweisen des Projektors, das eine elektronische Datenelement in dem Dateiformat auszugeben, das durch den Projektor projiziert werden kann;
in einem Fall, in dem das Bedienterminal direkt mit der einen elektronischen Vorrichtung kommunizieren kann, worin die eine elektronische Vorrichtung ein Multifunktionsperipheriegerät ist:
Übertragen einer Anforderung vom Bedienterminal zur Informationsspeichervorrichtung, und zwar zum Auffordern der Informationsspeichervorrichtung, das eine elektronische Datenelement in einem Dateiformat zu erlangen, das durch den Projektor projiziert werden kann,
Empfangen der Anforderung an die Informationsspeichervorrichtung zum Erlangen des einen elektronischen Datenelements in der Informationsspeichervorrichtung in einem Fall, in dem das Dateiformat des einen elektronischen Datenelements sich von einem Dateiformat unterscheidet, das angefordert wird, Konvertieren des Dateiformats des einen elektronischen Datenelements in das Dateiformat, das angefordert wird,
Übertragen der konvertierten Datei von der Informationsspeichervorrichtung zum Bedienterminal,
Übertragen der von der Informationsspeichervorrichtung (10) übertragenen konvertierten Datei als eine Druckdatei vom Bedienterminal zum Multifunktionsperipheriegerät, und
Anweisen des Multifunktionsperipheriegeräts, das eine elektronische Datenelement in dem Dateiformat auszugeben, das durch den Projektor gedruckt werden kann;
in einem Fall, in dem das Bedienterminal nicht direkt mit der einen elektronischen Vorrichtung kommunizieren kann:
Übertragen einer Ausgabeanforderung zum Ausgeben des einen elektronischen Datenelements vom Bedienterminal zur Informationsspeichervorrichtung, wobei die Ausgabeanforderung die durch den ersten Erlangungsteil erlangte Identifizierungsinformation, Identifizierungsinformation des einen elektronischen Datenelements, Information eines ausgewählten Dateiformats und eine IP-Adresse der elektronischen Vorrichtung einschließt,
Empfangen der Ausgabeanforderung vom Bedienterminal in der Informationsspeichervorrichtung,
worin in einem Fall, in dem die durch die Identifizierungsinformation identifizierte elektronische Vorrichtung der Projektor (14) ist, das Verfahren ferner umfasst:
Anweisen des Informationsspeicher-Konvertierungsteils, das eine elektronische Datenelement in das Dateiformat zu konvertieren, das durch den Projektor projiziert werden kann, und Anweisen des Projektors, das in das Dateiformat konvertierte eine elektronische Datenelement auszugeben, und
in einem Fall, in dem die durch die Identifizierungsinformation identifizierte elektronische Vorrichtung das Multifunktionsperipheriegerät (13) ist, das Verfahren ferner umfasst:
Anweisen des Informationsspeicher-Konvertierungsteils, das eine elektronische Datenelement in das Dateiformat zu konvertieren, das durch das Multifunktionsperipheriegerät gedruckt werden kann, und Anweisen des Multifunktionsperipheriegeräts, das in das Dateiformat konvertierte eine elektronische Datenelement auszugeben.

6. Dienstbereitstellungsverfahren zum Steuern der Operationen des Bedienterminals nach Anspruch 5, worin
im Übertragungsschritt die elektronischen Daten übertragen werden und Ausgabeeinstellungen zum Bewirken, dass die elektronische Vorrichtung die elektronischen Daten ausgibt, übertragen werden.

7. Nichtflüchtiges computerlesbares Informationsaufzeichnungsmedium, das eine Anwendung speichert, die, wenn sie durch einen oder mehrere Prozessoren ausgeführt wird, ein Bedienterminal steuert, um alle Schritte des Verfahrens nach Anspruch 5 oder Anspruch 6 durchzuführen.

## Revendications

1. Système de fourniture de service, comprenant :
un appareil de stockage d'informations (10) qui inclut une partie de stockage qui stocke des données électroniques ; et
un terminal d'opération (11, 12) qui est connecté à l'appareil de stockage d'informations ;
dans lequel le système de fourniture de service est configuré de manière à mettre en oeuvre un service de sortie consistant à fournir en sortie des données électroniques stockées dans la partie de stockage, en utilisant un appareil électronique parmi une pluralité d'appareils électroniques incluant un projecteur (14) et un périphérique multifonction (13) ;
dans lequel le terminal d'opération (11, 12) est configuré de manière à fonctionner en tant que :
une première partie d'obtention qui obtient des informations d'identification permettant d'identifier l'appareil électronique parmi la pluralité d'appareils électroniques, sur la base d'informations qui sont appliquées en entrée en réponse à une opération mise en oeuvre sur ledit un appareil électronique ;
une seconde partie d'obtention qui obtient une liste des données électroniques stockées dans l'appareil de stockage d'informations ;
une partie d'affichage qui affiche la liste des données électroniques obtenue par la seconde partie d'obtention ;
une partie de réception qui reçoit une sélection d'une donnée électronique dans la liste des données électroniques à fournir en sortie ;
une partie de transmission qui transmet des demandes à l'appareil de stockage d'informations ; et
une partie de commande de sortie qui fournit en sortie ladite une donnée électronique ; et
l'appareil de stockage d'informations (10) est configuré de manière à fonctionner en tant que :
une partie de conversion qui convertit le format de fichier de ladite une donnée électronique ;
une partie de commande de sortie qui fournit en sortie ladite une donnée électronique ; et
une partie de transmission qui transmet ladite une donnée électronique ou ladite une donnée électronique au format de fichier converti, au terminal d'opération,
dans lequel le système de fourniture de service est configuré de sorte que :
dans un cas où le terminal d'opération peut communiquer directement avec ledit un appareil électronique, dans lequel l'appareil électronique est un projecteur :
la partie de transmission de terminal d'opération transmet une demande à l'appareil de stockage d'informations pour demander à l'appareil de stockage d'informations d'obtenir ladite une donnée électronique dans un format de fichier qui peut être projeté par le projecteur,
lorsque l'appareil de stockage d'informations reçoit la demande envoyée à l'appareil de stockage d'informations pour obtenir ladite une donnée électronique, dans un cas où le format de fichier de ladite une donnée électronique est différent d'un format de fichier qui est demandé, la partie de conversion d'appareil de stockage d'informations convertit le format de fichier de ladite une donnée électronique en le format de fichier qui est demandé ;
la partie de transmission d'appareil de stockage d'informations transmet le fichier converti au terminal d'opération ;
la partie de commande de sortie de terminal d'opération transmet le fichier converti transmis à partir de l'appareil de stockage d'informations (10) en tant qu'un fichier de projection, au projecteur ; et
elle donne instruction au projecteur de fournir en sortie ladite une donnée électronique dans le format de fichier qui peut être projeté par le projecteur ;
dans un cas où le terminal d'opération peut communiquer directement avec ledit un appareil électronique, dans lequel l'appareil électronique est un périphérique multifonction :
la partie de transmission transmet une demande à l'appareil de stockage d'informations pour demander à l'appareil de stockage d'informations d'obtenir ladite une donnée électronique dans un format de fichier qui peut être imprimé par le périphérique multifonction ;
lorsque l'appareil de stockage d'informations reçoit la demande envoyée à l'appareil de stockage d'informations pour obtenir ladite une donnée électronique dans un cas où le format de fichier de ladite une donnée électronique est différent d'un format de fichier qui est demandé, la partie de conversion d'appareil de stockage d'informations convertit le format de fichier de ladite une donnée électronique en le format de fichier qui est demandé ;
la partie de transmission d'appareil de stockage d'informations transmet le fichier converti au terminal d'opération ;
la partie de commande de sortie de terminal d'opération transmet le fichier converti transmis à partir de l'appareil de stockage d'informations (10) en tant qu'un fichier d'impression, au périphérique multifonction ; et
elle donne instruction, au périphérique multifonction, de fournir en sortie ladite une donnée électronique dans le format de fichier qui peut être imprimé par le périphérique multifonction ;
dans un cas où le terminal d'opération ne peut pas communiquer directement avec ledit un appareil électronique :
la partie de transmission transmet une demande de sortie à l'appareil de stockage d'informations pour fournir en sortie ladite une donnée électronique, la demande de sortie incluant les informations d'identification obtenues par la première partie d'obtention, des informations d'identification de ladite une donnée électronique, des informations d'un format de fichier sélectionné, et une adresse IP de l'appareil électronique ;
lorsque l'appareil de stockage d'informations reçoit la demande de sortie en provenance du terminal d'opération dans un cas où l'appareil électronique identifié par les informations d'identification est le projecteur (14), la partie de commande de sortie d'appareil de stockage d'informations donne instruction à la partie de conversion d'appareil de stockage d'informations de convertir ladite une donnée électronique en le format de fichier qui peut être projeté par le projecteur, et donne instruction au projecteur de fournir en sortie ladite une donnée électronique au format de fichier converti ; et
dans lequel, lorsque l'appareil de stockage d'informations (10) reçoit la demande de sortie en provenance du terminal d'opération dans un cas où l'appareil électronique identifié par les informations d'identification est le périphérique multifonction (13), la partie de commande de sortie d'appareil de stockage d'informations donne instruction à la partie de conversion d'appareil de stockage d'informations de convertir ladite une donnée électronique en un format de fichier qui peut être imprimé par le périphérique multifonction et donne instruction au périphérique multifonction de fournir en sortie ladite une donnée électronique au format de fichier converti.

2. Système de fourniture de service selon la revendication 1, dans lequel
la partie de commande de sortie de terminal d'opération transmet les données électroniques, et transmet des paramétrages de sortie pour amener l'appareil électronique à fournir en sortie les données électroniques.

3. Système de fourniture de service selon la revendication 1 ou 2, dans lequel le terminal d'opération (11, 12) inclut une partie photographique configurée de manière à photographier ; et
la partie de détermination est configurée de manière à déterminer ledit un appareil électronique parmi la pluralité d'appareils électroniques, sur la base d'informations incluses dans des données d'image photographiées par la partie photographique en tant que les informations appliquées en entrée à partir de l'extérieur du terminal d'opération.

4. Système de fourniture de service selon la revendication 3, dans lequel
la partie de détermination applique en entrée les données d'image en photographiant, à l'aide de la partie photographique, une image qui est affichée par ledit un appareil électronique.

5. Procédé de fourniture de service pour commander les opérations d'un terminal d'opération (11, 12) connecté à un appareil de stockage d'informations (10) qui comprend une partie de stockage stockant des données électroniques, et pour fournir un service de sortie consistant à fournir en sortie des données électroniques stockées dans la partie de stockage en utilisant un appareil électronique parmi une pluralité d'appareils électroniques incluant un projecteur (14) et un périphérique multifonction (13) ;
le procédé de fourniture de service comprenant l'utilisation du terminal d'opération pour :
obtenir des informations d'identification permettant d'identifier ledit un appareil électronique parmi la pluralité d'appareils électroniques, sur la base d'informations qui sont appliquées en entrée en réponse à une opération mise en oeuvre sur ledit un appareil électronique ;
obtenir une liste des données électroniques stockées dans l'appareil de stockage d'informations ;
afficher la liste des données électroniques obtenue par la seconde partie d'obtention ;
recevoir une sélection d'une donnée électronique dans la liste des données électroniques à fournir en sortie ;
transmettre des demandes à l'appareil de stockage d'informations ; et
fournir en sortie ladite une donnée électronique ; et
comprenant l'utilisation de l'appareil de stockage d'informations (10) pour :
convertir le format de fichier de ladite une donnée électronique ;
fournir en sortie ladite une donnée électronique ; et
transmettre ladite une donnée électronique ou ladite une donnée électronique au format de fichier converti, au terminal d'opération,
dans lequel, dans un cas où le terminal d'opération peut communiquer directement avec ledit un appareil électronique, dans lequel l'appareil électronique est un projecteur, le procédé comprend les étapes ci-dessous consistant à :
transmettre une demande, du terminal d'opération à l'appareil de stockage d'informations, pour demander à l'appareil de stockage d'informations d'obtenir ladite une donnée électronique dans un format de fichier qui peut être projeté par le projecteur ;
recevoir, au niveau de l'appareil de stockage d'informations, la demande envoyée à l'appareil de stockage d'informations pour obtenir ladite une donnée électronique, dans un cas où le format de fichier de ladite une donnée électronique est différent d'un format de fichier qui est demandé, convertir le format de fichier de ladite une donnée électronique en le format de fichier qui est demandé ;
transmettre le fichier converti de l'appareil de stockage d'informations au terminal d'opération ;
transmettre, à partir du terminal d'opération, le fichier converti transmis à partir de l'appareil de stockage d'informations (10), en tant qu'un fichier de projection, au projecteur ; et
donner instruction au projecteur de fournir en sortie ladite une donnée électronique dans le format de fichier qui peut être projeté par le projecteur ;
dans un cas où le terminal d'opération peut communiquer directement avec ledit un appareil électronique, dans lequel l'appareil électronique est un périphérique multifonction :
transmettre une demande, du terminal d'opération à l'appareil de stockage d'informations, pour demander à l'appareil de stockage d'informations d'obtenir ladite une donnée électronique dans un format de fichier qui peut être projeté par le projecteur ;
recevoir, au niveau de l'appareil de stockage d'informations, la demande envoyée à l'appareil de stockage d'informations pour obtenir ladite une donnée électronique dans un cas où le format de fichier de ladite une donnée électronique est différent d'un format de fichier qui est demandé, convertir le format de fichier de ladite une donnée électronique en le format de fichier qui est demandé ;
transmettre le fichier converti de l'appareil de stockage d'informations au terminal d'opération ;
transmettre, à partir du terminal d'opération, le fichier converti transmis à partir de l'appareil de stockage d'informations (10) en tant qu'un fichier d'impression, au périphérique multifonction ; et
donner instruction, au périphérique multifonction, de fournir en sortie ladite une donnée électronique dans le format de fichier qui peut être imprimé par le projecteur ;
dans un cas où le terminal d'opération ne peut pas communiquer directement avec ledit un appareil électronique :
transmettre, à partir du terminal d'opération, une demande de sortie, à l'appareil de stockage d'informations, pour fournir en sortie ladite une donnée électronique, la demande de sortie incluant les informations d'identification obtenues par la première partie d'obtention, des informations d'identification de ladite une donnée électronique, des informations d'un format de fichier sélectionné, et une adresse IP de l'appareil électronique ;
recevoir, au niveau de l'appareil de stockage d'informations, la demande de sortie en provenance du terminal d'opération,
dans lequel, dans un cas où l'appareil électronique identifié par les informations d'identification est le projecteur (14), le procédé comprend en outre les étapes ci-dessous consistant à :
donner instruction à la partie de conversion d'appareil de stockage d'informations de convertir ladite une donnée électronique en le format de fichier qui peut être projeté par le projecteur, et donner instruction au projecteur de fournir en sortie ladite une donnée électronique au format de fichier converti ; et
dans un cas où l'appareil électronique identifié par les informations d'identification est le périphérique multifonction (13), le procédé comprend en outre les étapes ci-dessous consistant à :
donner instruction, à la partie de conversion d'appareil de stockage d'informations, de convertir ladite une donnée électronique en le format de fichier qui peut être imprimé par le périphérique multifonction et donner instruction, au périphérique multifonction, de fournir en sortie ladite une donnée électronique au format de fichier converti.

6. Procédé de fourniture de service pour commander des opérations du terminal d'opération selon la revendication 5, dans lequel,
à l'étape de transmission, les données électroniques sont transmises, et des paramétrages de sortie pour amener l'appareil électronique à fournir en sortie les données électroniques sont transmis.

7. Support de stockage d'informations lisibles par ordinateur non transitoire stockant une application qui, lorsqu'elle est exécutée par un ou plusieurs processeurs, commande à un terminal d'opération de mettre en oeuvre toutes les étapes du procédé selon la revendication 5 ou 6.
